(19) Europäisches Patentamt
European Patent Office
Office européen des brevets

(11) Publication number: **0 427 567 A2**

# (12) EUROPEAN PATENT APPLICATION

(21) Application number: **90312292.7**

(22) Date of filing: **09.11.90**

(51) Int. Cl.5: **H01Q 15/14**, H01Q 15/16, B32B 15/08

(30) Priority: **09.11.89 JP 291745/89**
**09.11.89 JP 291746/89**
**09.11.89 JP 291747/89**
**21.02.90 JP 40480/90**

(43) Date of publication of application:
**15.05.91 Bulletin 91/20**

(84) Designated Contracting States:
**DE FR GB**

(71) Applicant: **MITSUI PETROCHEMICAL INDUSTRIES, LTD.**
**2-5, Kasumigaseki 3-chome Chiyoda-ku**
**Tokyo 100(JP)**

Applicant: **Bridgestone Corporation**
**10-1, Kyobashi 1-Chome Chuo-Ku**
**Tokyo 104(JP)**

(72) Inventor: **Yoshihara, Yukio, c/o Mitsui Petrochem. Ind., Ltd.**
**1-2 Waki 6-chome, Waki-cho**
**Kuga-gun, Yamaguchi 740(JP)**
Inventor: **Kanayama, Tatsuya**
**1-24 Gumisawa 7-chome**
**Totsuka-ku, Yokohama 245(JP)**
Inventor: **Honma, Shiro, c/o Mitsui Petrochem. Ind., Ltd.**
**1-2 Waki 6-chome, Waki-cho**
**Kuga-gun, Yamaguchi 740(JP)**
Inventor: **Okamoto, Toshikhiko**
**1914-4, Manazuru**
**Ashigara-shimo-gun, Kanagawa 259-02(JP)**

(74) Representative: **Myerscough, Philip Boyd et al**
**J.A.Kemp & Co. 14, South Square Gray's Inn**
**London, WC1R 5EU(GB)**

## (54) Parabolic antenna reflector and process for preparing same.

(57) The invention relates to parabolic antenna reflectors (1) wherein a cycloolefin type random copolymer, a modified polyolefin polymer or a composition comprising a polyamide and a polyolefin is used as the resin which forms a back-up layer (4). The parabolic antenna reflectors (1) of the present invention have excellent interlaminar bond strength between a metallic layer (3) and the back-up layer (4) ,and do not delaminate even when each layer is foamed or shrunk by heat cycle after molding. Moreover, the parabolic antenna reflectors (1) have excellent surface accuracy and corrosion resistance, do not cause unevenness in radio wave reflection, retain radio wave reflectivity over a long period of time and may be simply prepared with excellent moldability.

EP 0 427 567 A2

FIG. 1 (A)

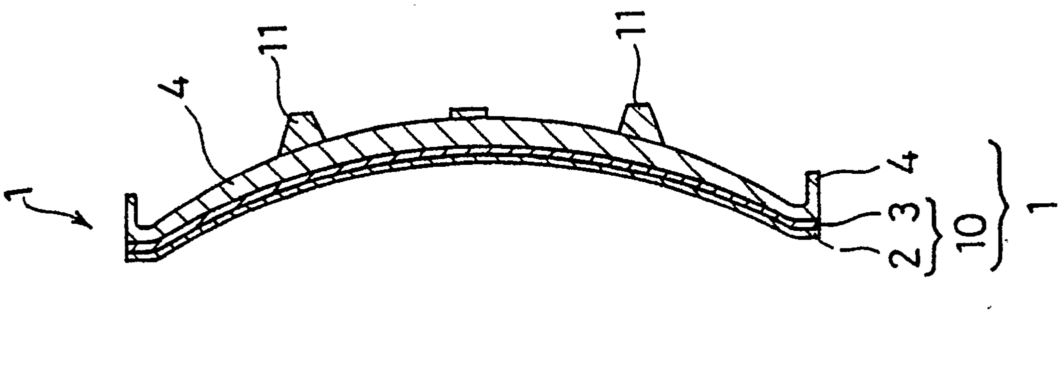

# PARABOLIC ANTENNA REFLECTOR AND PROCESS FOR PREPARING SAME

## FIELD OF THE INVENTION

This invention relates to parabolic antenna reflectors and processes for preparing the same.

## BACKGROUND OF THE INVENTION

Parabolic antenna reflectors have been conventionally prepared by applying corrosion-resistant coating to metallic sheets or press-molding corrosion-resistant metal.

However, when the parabolic antenna reflectors are prepared by the above-mentioned methods, there are problems that production cost is increased or that after the molding of the parabolic antenna reflectors having a desired shape, the reflectors suffer the so-called spring back, the surface accuracy of the parabolic antenna reflectors is lowered and as a result, the reflection performance of radio wave is lowered.

In addition to the above-mentioned methods, there is a process for preparing the parabolic antenna reflector by using electrically conductive nonwoven fabric and a fiber-reinforced unsaturated polyester sheet (sheet molding compound, SMC) and press-molding them. This process has disadvantages in that the production cycle thereof is long (namely, there are many production stages) and the resulting reflector requires finishing or surface coating.

Further, press-molded articles composed of a metallic foil and a glass fiber-reinforced olefin resin sheet have been proposed as the parabolic antenna reflectors. However, the molded articles have such disadvantages that surface properties are poor, for example, surface smoothness is inferior and surface accuracy is low.

Japanese Patent Laid-Open Publn. Nos. 161004/1986 and 161003/1986 disclose processes for preparing parabolic antenna reflectors. However, these processes have such problems that when a protective layer composed of an inorganic filler-containing resin is formed, a large amount of the filler must be used to prevent delamination caused by linear expansion and heat cycle between a metal layer and a metallic protective layer composed of an inorganic filler-containing resin or a back-up layer composed of an inorganic filler-containing olefin polymer. Therefore the appearance of the parabolic antenna reflectors are deteriorated and interlaminar bond strength becomes low. In addition, there are also such problems that since the antenna reflectors are deformed, after molding it is difficult to enhance surface accuracy and sink marks in the boss-fixing part of the reflector are large. Furthermore, when such a large amount of the filler is used, the filler causes the wear of the screws or cylinders of molding machines and the life of molds is adversely affected.

Japanese Patent Laid-Open Publn. No. 116440/1985 discloses laminates prepared by laminating (A) a thermoplastic resin having good weather resistance, (B) a metallic foil and (C) an inorganic filler-containing polymer layer in order.

Japanese Patent Laid-Open Publn. No. 153608/1985 discloses an antenna reflector for circularly polarized wave, prepared by laminating (A) a thermoplastic resin layer having good weather resistance, (B) at least one shaped article selected from the group consisting of metallic mat, cloth and net and (C) an inorganic filler-containing olefin polymer layer in order.

These patent specifications disclose that (C) the inorganic filler-containing olefin polymer layer contains 10 to 80% by weight of an inorganic filler and modified polyolefins are used as the olefin polymer.

Japanese Patent Laid-Open Publn. No. 212006/1985 discloses an antenna reflector for circularly polarized wave, composed of a laminate comprising an olefin polymer layer having excellent weather resistance, a radio wave-reflecting metallic layer, an inorganic filler-containing olefin polymer layer and a modified olefin polymer layer obtained by modifying an olefin polymer with an unsaturated carboxylic acid and/or its anhydride, said modified olefin polymer layer being interposed between said metallic layer and said inorganic filler-containing olefin polymer layer.

This patent specification discloses that the inorganic filler-containing olefin polymer layer contains 10 to 80% by weight of an inorganic filler. Further, it teaches that a blowing agent may be added to the inorganic filler-containing olefin polymer layer and said layer may be foamed.

Japanese Patent Laid-Open Publn. No. 153610/1985 discloses an antenna reflector for circularly polarized wave, prepared by laminating a thermoplastic resin having excellent weather resistance, a radio

wave-reflecting metallic layer and an inorganic filler-containing polyamide resin layer in order.

Japanese Patent Laid-Open Publn. No. 171801/1985 discloses an antenna reflector for circularly polarized wave, prepared by laminating (A) a metallic layer having a coating layer excellent in weather resistance and (B) an inorganic filler containing polyamide resin layer.

Japanese Patent Laid-open Publn. No. 171804/1985 discloses an antenna reflector for circularly polarized wave, prepared by laminating (A) a thermoplastic resin layer having good weather resistance, (B) at least one shaped article selected from the group consisting of metallic mat, cloth and net and (C) an inorganic filler-containing polyamide resin layer in order.

These patent specifications disclose that the inorganic filler-containing polyamide resin layer contains 10 to 80% by weight of an inorganic filler.

## OBJECT OF THE INVENTION

The present invention is intended to solve such problems associated with the prior arts as mentioned above and an object of the invention is to provide a parabolic antenna reflector which is excellent in particularly interlaminar bond strength between the metallic layer and the back-up layer of the reflector and does not cause delamination even when each layer is expanded or shrunk by heat cycle, etc. after molding and, moreover, which is excellent in surface accuracy, does not cause unevenness in radio wave reflection, is excellent in corrosion resistance, can well retain radio wave reflectivity over a long period of time and can be prepared with excellent moldability by a simple process.

Another object of the invention is to provide a process for preparing a parabolic antenna reflector.

## SUMMARY OF THE INVENTION

The first parabolic antenna reflector of the present invention is characterized by comprising a laminate prepared by laminating a metallic layer-protecting resin layer, a metallic layer and a back-up layer composed of the following cycloolefin type random copolymer (A) in this order.

[A]: A cycloolefin type random copolymer comprising an ethylene component and a cycloolefin component derived from a monomer represented by the following general formula [I] or [II].

General formula

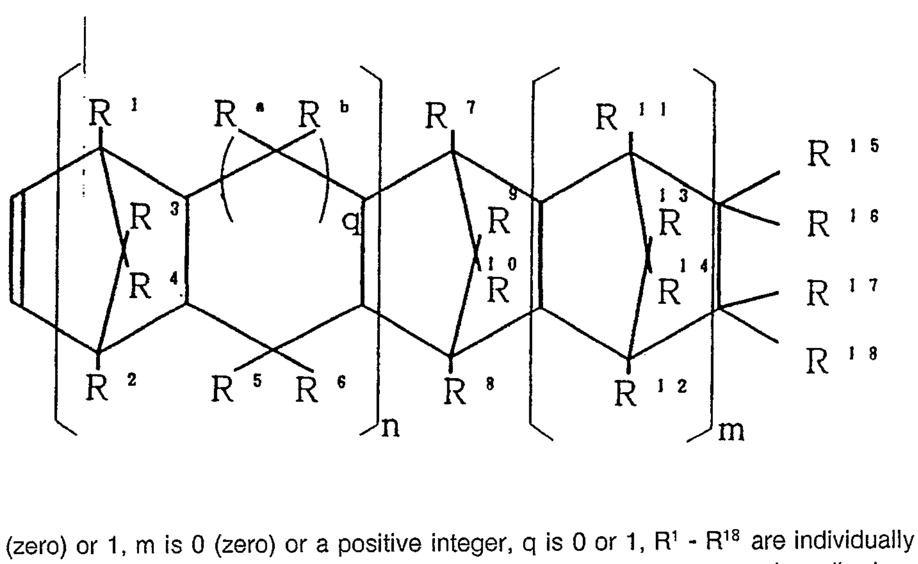

wherein n is 0 (zero) or 1, m is 0 (zero) or a positive integer, q is 0 or 1, $R^1$ - $R^{18}$ are individually hydrogen, halogen or hydrocarbon group, $R^{15}$ - $R^{18}$ may, linking together, form a mono- or polycyclic ring which may have a double bond, and $R^{15}$ together with $R^{16}$ or $R^{17}$ together with $R^{18}$ may form an alkylidene group.

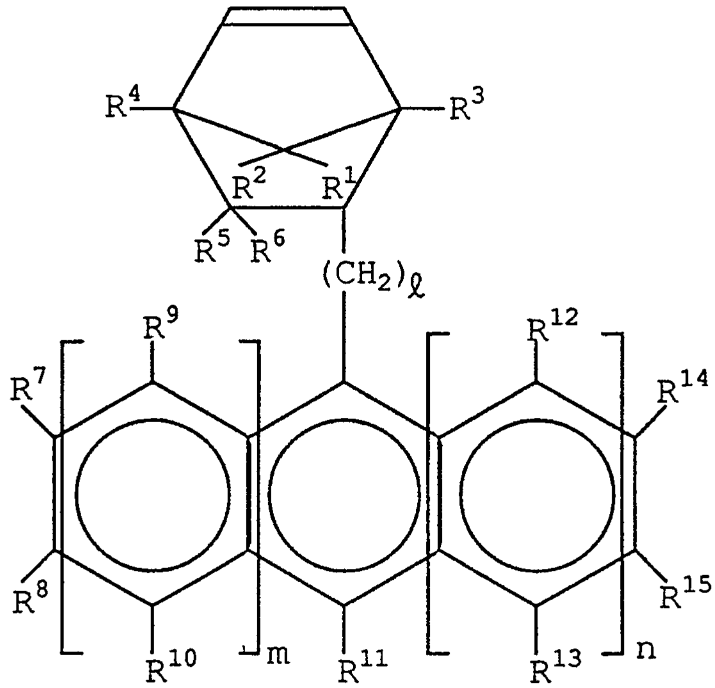

[II]

wherein ℓ is 0 (zero) or an integer of at least 1, m and n are each 0 (zero), 1 or 2, $R^1$ - $R^{15}$ is individually hydrogen, halogen, aliphatic hydrocarbon group, aromatic hydrocarbon group or alkoxy group, and $R^5$ (or $R^6$) and $R^9$ (or $R^7$) may be linked together through an alkylene group of 1-3 carbon atoms or linked together directly without through the alkylene group.

The second parabolic antenna reflector of the present invention is characterized by comprising a laminate prepared by laminating a metallic layer-protecting resin layer, a metallic layer and a back-up layer composed of a composition comprising the above-mentioned cycloolefin type random copolymer [A] and a non-crystalline or low crystalline α-olefin type elastomeric copolymer composed of at least two olefins in this order.

The third parabolic antenna reflector of the present invention is characterized by comprising a laminate prepared by laminating a metallic layer-protecting resin layer, a metallic layer and a back-up layer composed of a modified olefin polymer formed by graft-modifying an olefin polymer with a modifier having a polar group in this order.

The fourth parabolic antenna reflector of the present invention is characterized by comprising a metallic layer-protecting resin layer, a metallic layer and a back-up layer composed of a composition containing a polyamide and a polyolefin in this order.

The first process for preparing the parabolic antenna reflectors of the present invention is characterized by comprising

either laminating a resin film or sheet onto one side of a metallic layer or coating one side of the metallic layer with a resin to form a metallic layer-protecting resin layer on one side of the metallic layer;

placing the resulting laminate in a mold in such a way that the metallic layer protecting resin layer of the laminate is brought into contact with the convex surface of the mold; and then

injecting the above-mentioned cycloolefin type random copolymer through the nozzle of the mold into the mold to form a back-up layer composed of the cycloolefin type random copolymer on other side of the metallic layer.

The second process for preparing the parabolic antenna reflectors of the present invention is characterized by comprising

either laminating a resin film or sheet onto one side of a metallic layer or coating one side of the metallic layer with a resin to form a metallic layer-protecting resin layer on one side of the metallic layer;

placing the resulting laminate in a mold in such a way that the metallic layer-protecting resin layer of the laminate is brought into contact with the convex surface of the mold; and then

injecting a composition comprising of the above-described cycloolefin type random copolymer [A] and a non-crystalline or low-crystalline α-olefin type elastomeric polymer composed of at least two α-olefins

through the nozzle of the mold into the mold to form a back-up layer composed of the cycloolefin type random copolymer and the α-olefin type elastomeric copolymer on other side of the metallic layer.

The third process for preparing the parabolic antenna reflectors of the present invention is characterized by comprising
either laminating a resin film or sheet onto one side of a metallic layer or coating one side of the metallic layer to form a metallic layer protecting resin layer on one side of the metallic layer;
either subjecting other surface of the metallic layer to surface treatment such as plasma treatment or priming treatment or laminating an adhesive resin film onto other side of the metallic layer to form an adhesive layer;
placing the resulting laminate in a mold in such a way that the metallic layer-protecting resin layer of the laminate is brought into contact with the convex surface of the mold; and then
injecting a modified olefin polymer obtained by modifying an olefin polymer with a modifier having a polar group through the nozzle of the mold into the mold to form a back-up layer composed of the modified olefin polymer on the surface-treated side of the metallic layer or one the adhesive layer.

The fourth process for preparing the parabolic antenna reflectors of the present invention is characterized by comprising
either laminating a resin film or sheet onto one side of a metallic layer or coating one side of the metallic layer with a resin to form a metallic layer-protecting resin layer on one side of the metallic layer;
either subjecting other side of the metallic layer to surface treatment such as plasma treatment or priming treatment or laminating an adhesive film onto other side of the metallic layer to form an adhesive layer;
placing the resulting laminate in a mold in such a way that the metallic layer-protecting resin layer of the laminate is brought into contact with the convex surface of the mold; and then
injecting a composition containing a polyamide and a polyolefin through the nozzle of the mold into the mold to form a back-up layer composed of the composition containing a polyamide and a polyolefin on the surface-treated side of the metallic layer or on the adhesive layer.

In the parabolic antenna reflectors of the present invention, the metallic layer-protecting resin layer having excellent weather resistance is laminated onto one side of the metallic layer which reflects radio wave and the back-up layer composed of the above-described specific resin is laminated onto other side of the metallic layer as described above. Accordingly, the interlaminar bond strength between the metallic layer and the back-up layer as the constituent members of the parabolic antenna reflector, are particularly superior and delamination is not caused even when each layer is expanded or shrunk by heat cycle, etc. after molding. Further, the parabolic antenna reflectors of the present invention are excellent in surface accuracy and hence they do not cause unevenness in the reflection of radio wave. Furthermore, they are excellent in corrosion resistance, and can well retain radio wave reflectivity over a long period of time. In addition the parabolic antenna reflectors of the present invention can be prepared by a simple process.

## BRIEF DESCRIPTION OF THE DRAWINGS

Figures 1(A) and 1(B) show each schematically a sectional view of an embodiment of parabolic antenna reflector according to the present invention.
Figure 2 is a partial perspective view of a parabolic antenna provided with a parabolic antenna reflector of the present invention.
Figures 3A and 3B show each schematically a sectional view of the parabolic antenna reflector of the present invention and a mold used in the preparation of the parabolic antenna reflector.
1: parabolic antenna reflector
2: metallic layer-protecting resin layer (resin layer for protecting metallic layer)
3: metallic layer
4: back-up layer
5: mold
6: movable half
7: front mold
8: nozzle
10: laminate
21: converter
22: converter-supporting arm
23: support for parabolic antenna reflector

24: cable

## DETAILED DESCRIPTION OF THE INVENTION

The parabolic antenna reflectors of the present invention are illustrated below in detail.

The parabolic antenna reflector 1 of the present invention is constructed from, for example, a laminate prepared by laminating a metallic layer-protecting resin layer 2, a metallic layer 3 and a back-up layer 4 in this order from the radio wave-receiving side.

In the parabolic antenna reflector 1 of the present invention, the metallic layer-protecting resin layer 2 has a thickness of generally 5 µm to 5 mm, preferably 10 µm to 1 mm.

When the thickness of the resin layer 2 is less than 5 µm, the metallic layer 3 is liable to be corroded, while when the thickness exceeds 5 mm, the reflectivity of radio wave is lowered and cost is apt to be increased.

The metallic layer 3 has a thickness of generally 0.01 µm to 1 mm, preferably 10 µm to 0.5 mm. When the thickness of the metallic layer 3 is less than 0.01 µm, radio wave reflectivity is liable to become inferior, and when the thickness is less than 10 µm, the metallic layer 3 is apt to be wrinkled, cut or broken in the preparation of the parabolic antenna reflector, the metallic layer must be sometimes strengthened and there is a fear of causing a lowering in the radio wave reflectivity of the resulting reflector. On the other hand, when the thickness exceeds 1 mm, the weight of the resulting parabolic antenna reflector is increased, cost is increased and fabrication is apt to be difficultly made.

The back-up layer 4 of the present invention is constructed from a cycloolefin type random polymer, a composition comprising a cycloolefin type random copolymer and an α-olefin elastomeric copolymer, a modified olefin polymer obtained by graft-modifying an olefin polymer with a modifier having a polar group or a composition comprising a polyamide and a polyolefin. The back-up layer has a thickness of generally 500 µm to 15 mm, preferably 1000 µm to 5 mm. When the thickness of the back-up layer is less than 500 µm, rigidity and impact strength is liable to be poor, while when the thickness exceeds 15 mm, products having sink marks and distortion are formed and the weight thereof is increased.

In the parabolic antenna reflector of the present invention, a primer layer may be provided on one side or both sides of the metallic layer as a member of the reflector. When such a primer layer is provided, the interlaminar bond strength between layers constituting the reflector can be further strengthened.

Preferably, the primer layer is formed from a material such as acrylic, epoxy, phenolic, polyester, polyurethane or polyamide primer. The primer layer has a thickness of generally 0.1 to 500 µm.

The diameter of the parabolic antenna reflector of the present invention or the minor axis of offset antenna reflector varies depending on the use thereof, but is usually about 20 to 100 cm.

The parabolic antenna reflector 1 of the present invention as described above is used in combination with, for example, the converter 21, the converter-supporting arm 22, the support 23 for supporting the parabolic antenna reflector, the cable 24, etc. as shown in Figure 2.

If desired, the parabolic antenna reflector of the present invention may be provided with boss parts 11 and rib part (not shown), etc.

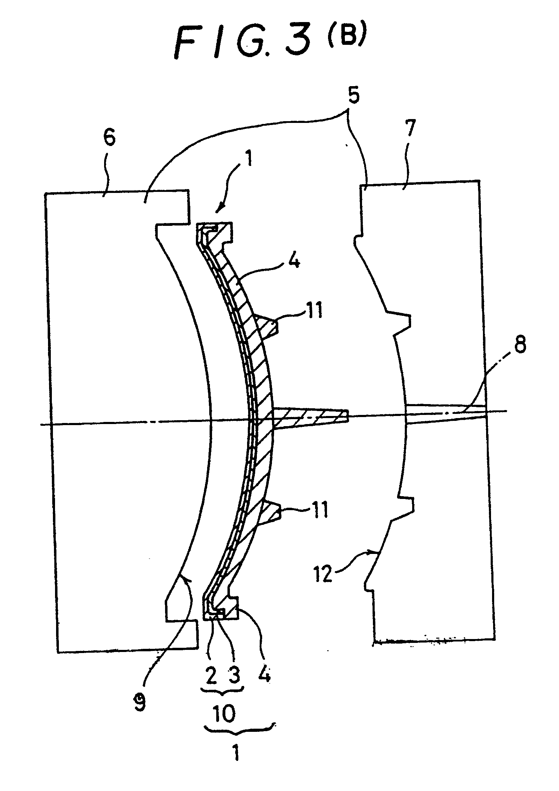

The parabolic antenna reflector provided with the boss parts, etc. as mentioned above can be prepared by abutting the laminate 10 composed of the metallic layer 3 and the metallic layer-protecting resin layer 2 against a parabolic projected surface 9 and injection-molding a resin constituting the back-up layer 4 so as to allow the resin to flow along a recessed surface 12 as shown in Fig. 3A and Fig. 1A, or by previously preforming the laminate 10 to form flange-shaped parts, abutting the laminate 10 against the parabolic projected surface 9 and injecting a resin constituting the back-up layer 4 to thereby form the back-up layer 4 by injection molding as shown in Fig. 3B and Fig. 1B.

Each layer which constitutes the parabolic antenna reflector is illustrated below in more detail.

### Metallic layer-protecting resin layer

### (Resin layer for protecting metallic layer)

Thermoplastic resins having excellent heat resistance are used for the metallic layer protecting resin

layer 2.

Examples of such thermoplastic resins include fluororesins such as PTFE (polytetrafluoroethylene), FEP (4-fluoroethylene/6-fluoropropylene copolymer resin), PFA (4-fluoroethylene/perchloroalkoxyethylene copolymer resin), polyvinyliden fluoride resin (PVdF) and PVF (polyvinyl fluoide), olefin resins such as vinyl chloride resins, ethylene homopolymer, propylene homopolymer and ethylene-propylene copolymer, acrylic resins, fluoro compound-acrylic compound copolymer resins, polyamide resins, polyester resins, silicone resins, silicone-polyester resins, polycarbonate resins, modified products thereof and copolymers thereof.

Among these resins, fluororesins and polyester resins are preferred, and polyesters, PVF and PVdF are more preferred.

It may be possible to obtain parabolic antenna reflectors having excellent heat resistance when the fluororesins are used.

These resins can be bonded to the metallic layer 3 by a film laminating method or a coating method described hereinafter. Particularly, when the metallic layer-protecting resin layer is formed by film laminating method, it is desirable that the surface of the metallic layer, said surface being to be bonded to a film, or both surfaces thereof is/are subjected to a treatment with a reagent such as sodium, plasma treatment, sputtering treating or priming treatment according to materials used for the metallic layer. When such treatments are carried out, the above resins and the metallic layer can be firmly bonded to each other.

Processes for preparing the above-described thermoplastic resins and the physical properties thereof are already known.

## Metallic layer

The metallic layer 3 as a member of the parabolic antenna reflector 1 of the present invention has a function capable of reflecting radio wave.

Metals such as aluminum, iron, nickel, copper and zinc or alloys composed of these metals as principal components, such as stainless steel and brass are used for the metallic layer 3.

The surfaces of the metallic layer 3 composed of these metals may be previously subjected to surface treatment such as formation treatment, chemical treatment with chromate, plating treatment, priming treatment with acrylic primers or urethane primers, sputtering treatment or plasma treatment. The metallic surfaces may be coated or printed. These treatments singly or in combination may be applied to the metallic surfaces. Alternatively, an adhesive film composed of a polyolefin resin, a modified polyolefin resin, ethylene-vinyl acetate copolymer, ethylene-vinyl alcohol copolymer, a modified product of these copolymers, an acrylic resin, a polyamide resin or a polyester resin or a laminated film composed of two or three layers of these films may be previously laminated onto the metal described hereinafter.

## Back-up layer

The back-up layer 4 which constitutes a member of the parabolic antenna reflector of the present invention has mainly a function of keeping the shape of the parabolic antenna reflector.

The back-up layer 4 of the present invention is a layer comprising a cycloolefin type random copolymer or a cycloolefin type random copolymer composition (hereinafter referred to as cycloolefin type random copolymer layer), a layer comprising a modified olefin polymer obtained by graft-modifying an olefin polymer with a modifier having a polar group (hereinafter referred to as modified olefin polymer layer) or a layer comprising a composition containing a polyamide and a polyolefin.

These back-up layers are illustrated below in more detail.

## Cycloolefin type random copolymer layer

Cycloolefin type random copolymers used for the cycloolefin type random copolymer layer which is the back-up layer of the first and second parabolic antenna reflectors of the present invention, comprise an ethylene component and a cycloolefin component derived from a monomer represented by the following general formula [I] or [II], said cycloolefin component forming a structure represented by the following

general formula [III] or [IV] in the cycloolefin type random copolymer.

General formula

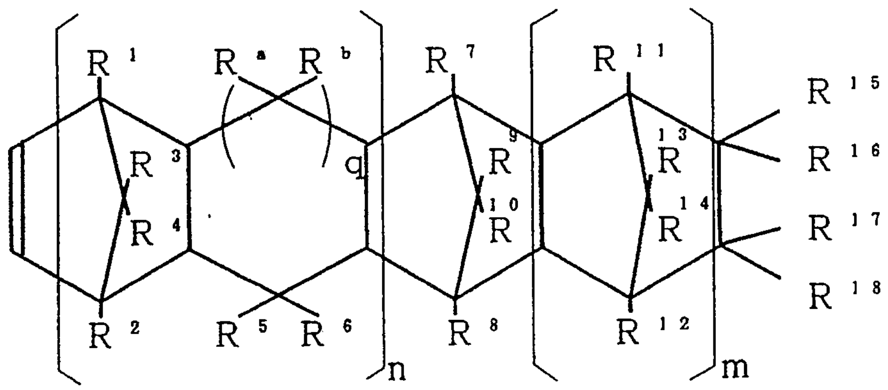

... [ I ]

wherein n is 0 (zero) or 1, m is 0 (zero) or a positive integer, q is 0 or 1, $R^1$ - $R^{18}$ are individually hydrogen, halogen or hydrocarbon group, $R^{15}$ - $R^{18}$ may, linking together, form a mono- or polycyclic ring which may have a double bond, and $R^{15}$ together with $R^{16}$ or $R^{17}$ together with $R^{18}$ may form an alkylidene group.

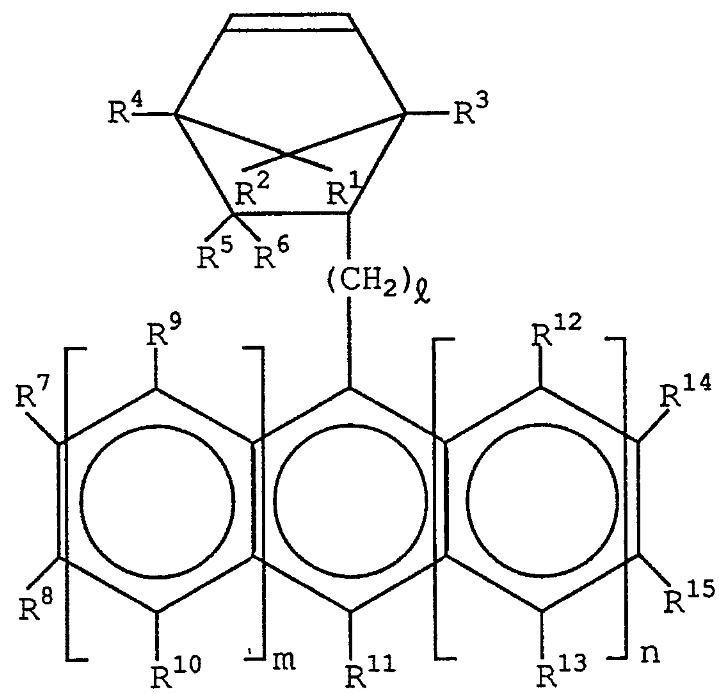

[II]

wherein ℓ is 0 (zero) or an integer of at least 1, m and n are each 0 (zero), 1 or 2, $R^1$ - $R^{15}$ is individually hydrogen, halogen, aliphatic hydrocarbon group, aromatic hydrocarbon group or alkoxy group, and $R^5$ (or $R^6$) and $R^9$ (or $R^7$) may be linked together through an alkylene group of 1-3 carbon atoms or linked together directly without through the alkylene group.

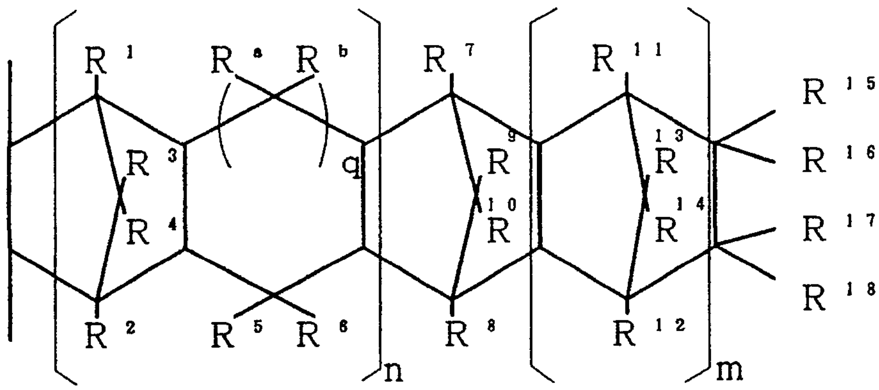

... [ III ]

wherein m, n, q and $R^1$ to $R^{18}$ are as defined above.

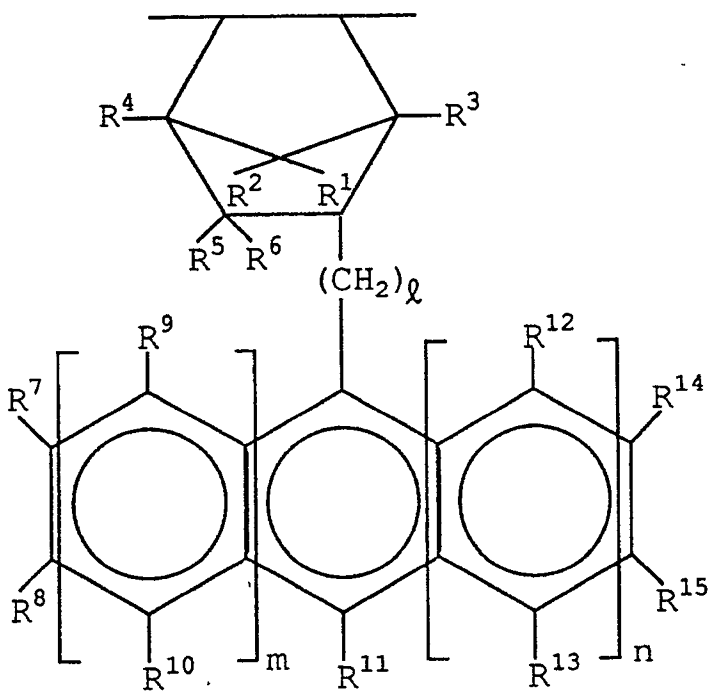

wherein ℓ, m, n and $R^1$ to $R^{15}$ are as defined above.

The cycloolefin type random copolymer layer may be foamed by expanding the cycloolefin type random copolymer.

In the above-mentioned formula [I], n is 0 (zero) or 1, preferably 0 (zero), m is 0 (zero) or a positive integer, preferably 0-3, and q is 0 or 1. In the above-mentioned formula [II], ℓ is 0 (zero) or an integer of at least 1, preferably an integer of 1-3.

$R^1$ - $R^{18}$ (formula [I]) or $R^1$ - $R^{15}$ (formula [II]) individually represent an atom or group selected from the group consisting of hydrogen, halogen and hydrocarbon, wherein the halogen includes, for example, fluorine, chlorine, bromine and iodine atoms, and the hydrocarbon group includes usually alkyl of 1-6 carbon atoms and cycloalkyl of 3-6 carbon atoms. Concrete examples of the alkyl include methyl, ethyl, isopropyl, isobutyl and amyl, and those of the cycloalkyl include cyclohexyl, cyclopropyl, cyclobutyl and cyclopentyl.

In the above-mentioned formula, $R^5$ (or $R^6$) and $R^9$ (or $R^7$) may be linked together through an alkylene group of 1-3 carbon atoms or may be linked together directly without through any group.

In the above-mentioned formula [I], $R^{15}$ - $R^{18}$ may form, linking together (in combination), a mono- or polycyclic ring which may have a double bond, and $R^{15}$ together with $R^{16}$, or $R^{17}$ together with $R^{18}$ may form an alkylidene of 2-4 carbon atoms, and concrete examples thereof include ethylidene, propylidene, isopropylidene and isobutylidene.

In the above formula [I], when "q" is 0 (zero), the ring represented by using "q" forms five-member ring.

The cycloolefins represented by the above-mentioned formula [I] or [II] may easily be prepared by condensing cyclopentadienes with corresponding olefins or cycloolefins through Diels-Alder reaction.

The cycloolefins represented by the above-mentioned formula [I] or [II] used in the present invention include concretely:

bicyclo[2.2.1]hept-2-ene derivative,
tetracyclo[4.4.0.$1^{2,5}$.$1^{7,10}$]-3-dodecene derivative,
hexacyclo[6.6.1.$1^{3,6}$.$1^{10,13}$.$0^{2,7}$.$0^{9,14}$]-4-heptadecene derivative,
octacyclo[8.8.0.$1^{2,9}$.$1^{4,7}$.1.$^{11,18}$.$1^{13,16}$.$0^{3,8}$.$0^{12,17}$]-5-docosene derivative,
pentacyclo[6.6.1.$1^{3,6}$.$0^{2,7}$.$0^{9,14}$]-4-hexadecene derivative,
heptacyclo-5-eicosene derivative,
heptacyclo-5-heneicosene derivative,
tricyclo[4.3.0.$1^{2,5}$]-3-decene derivative,
tricyclo[4.3.0.$1^{2,5}$]-3-undecene derivative,
pentacyclo[6.5.1.$1^{3,6}$.$0^{2,7}$.$0^{9,14}$]-4-pentadecene derivative,
pentacyclopentadecadiene derivative,
pentacyclo[4.7.0.$1^{2,5}$.$0^{8,13}$.$1^{9,12}$]-3-pentadecene derivative,
pentacyclo[7.8.0.$1^{3,6}$.$0^{2,7}$,$1^{10,17}$.$01^{1,16}$.$1^{12,15}$]-4-eicosane derivative, and
nonacyclo[9.10.1.1.1.4.7.$0^{3,8}$.$0^{2,10}$.$0^{12,21}$.$1^{13,20}$.$0^{14,19}$.$1^{15,19}$-5-pentacosene derivative.

Concrete examples of the above-mentioned compounds are shown below.

Bicyclo[2.2.1]hept-2-ene derivative including such as those mentioned below.

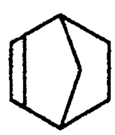

Bicyclo[2.2.1]hept-2-ene

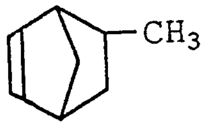

6-Methylbicyclo[2.2.1]hept-2-ene

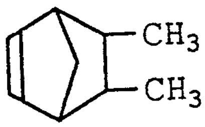

5,6-Dimethylbicyclo[2.2.1]hept-2-ene

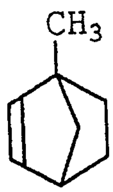

1-Methylbicyclo[2.2.1]hept-2-ene

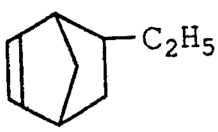

6-Ethylbicyclo[2.2.1]hept-2-ene

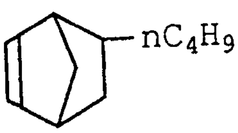

6-n-Butylbicyclo[2.2.1]hept-2-ene

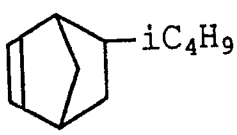

6-Isobutylbicyclo[2.2.1]hept-2-ene

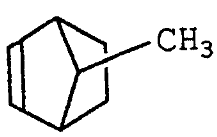

7-Methylbicyclo[2.2.1]hept-2-ene

Tetracyclo[4.4.0.1$^{2,5}$.1$^{7,10}$]-dodecene derivative including such as those mentioned below.

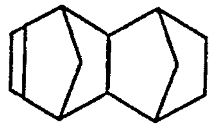

Tetracyclo[4.4.0.$1^{2,5}$.$1^{7,10}$]-3-dodecene

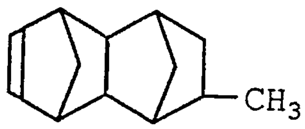

8-Methyltetracyclo[4.4.0.$1^{2,5}$.$1^{7,10}$]-3-dodecene

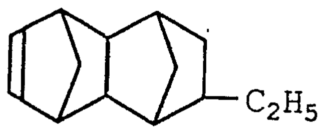

8-Ethyltetracyclo[4.4.0.$1^{2,5}$.$1^{7,10}$]-3-dodecene

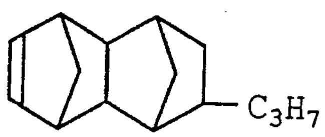

8-Propyltetracyclo[4.4.0.$1^{2,5}$.$1^{7.10}$]-3-dodecene

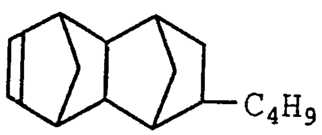

8-Butyltetracyclo[4.4.0.$1^{2,5}$.$1^{7,10}$]-3-dodecene

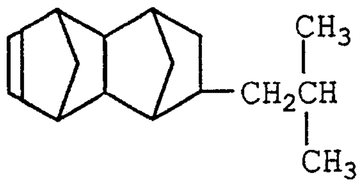

8-Isobutyltetracyclo[4.4.0.$1^{2,5}$.$1^{7,10}$]-3-dodecene

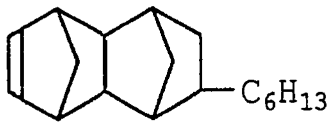

8-Hexyltetracyclo[4.4.0.$1^{2,5}$.$1^{7,10}$]-3-dodecene

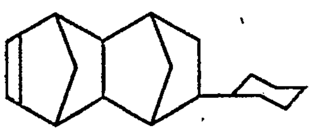

8-Cyclohexyltetracyclo[4.4,0.$1^{2,5}$.$1^{7,10}$]-3-dodecene

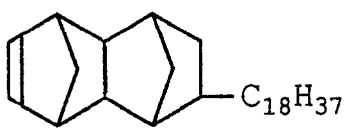

8-Stearyltetracyclo[4.4.0.$1^{2,5}$.$1^{7,10}$]-3-dodecene

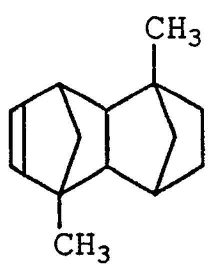

5,10-Dimethyltetracyclo-[4.4.0.$1^{2,5}$.$1^{7,10}$]-3-dodecene

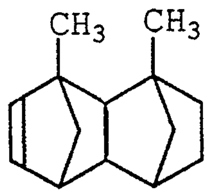

2,10-Dimethyltetracyclo-[4.4.0.$1^{2,5}$.$1^{7,10}$]-3-dodecene

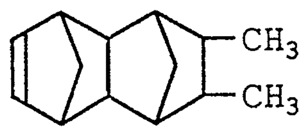

8,9-Dimethyltetracyclo[4.4.0.$1^{2,5}$ $1^{7,10}$]-3-dodecene

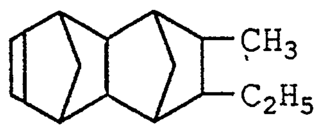

8-Ethyl-9-methyltetracyclo[4.4.0.$1^{2,5}$.$1^{7,10}$]-3-dodecene

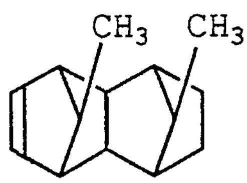

11,12-Dimethyltetracyclo-[4.4.0.$1^{2,5}$.$1^{7,10}$]-3-dodecene

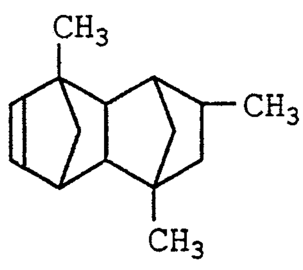

2,7,9-Trimethyltetracyclo-[4.4.0.$1^{2,5}$.$1^{7,10}$]-3-dodecene

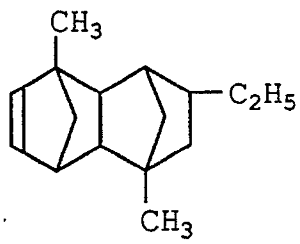

9-Ethyl-2,7-dimethyltetracyclo-[$4.4.0.1^{2,5}.1^{7,10}$]-3-dodecene

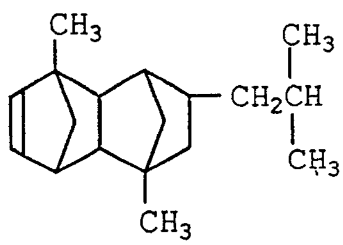

9-Isobutyl-2,7-dimethyltetracyclo-[$4.4.0.1^{2,5}.1^{7,10}$]-3-dodecene

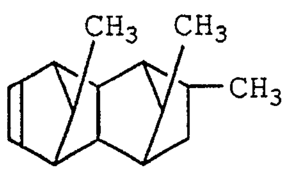

9,11,12-trimethyltetracyclo-[$4,4,0,1^{2.5},1^{7.10}$]-3-dodecene

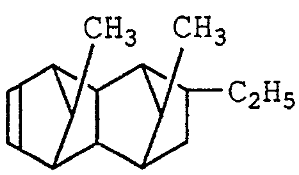

9-Ethyl-11,12-dimethyltetracyclo-[$4.4.0.1^{2,5}.1^{7,10}$]-3-dodecene

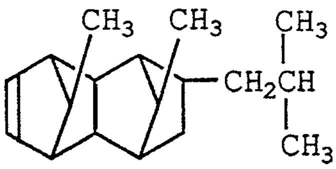

9-Isobutyl-11,12-dimethyltetracyclo-[4.4.0.$1^{2,5}$.$1^{7,10}$]-3-dodecene

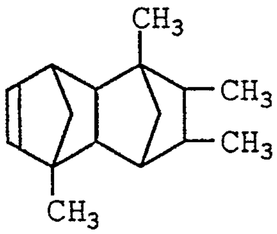

5,8,9,10-Tetramethyltetracyclo-[4.4.0.$1^{2,5}$.$1^{7,10}$]-3-dodecene

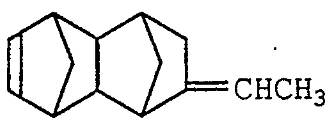

8-Ethylidenetetracyclo[4.4.0.$1^{2,5}$.$1^{7,10}$]-3-dodecene

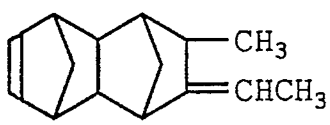

8-Ethylidene-9-methyltetracyclo[4.4.0.$1^{2,5}$.$1^{7,10}$]-3-dodecene

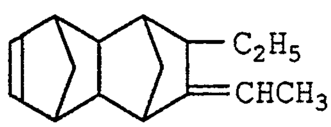

8-Ethylidene-9-ethyltetracyclo[4.4.0.$1^{2,5}$.$1^{7,10}$]-3-dodecene

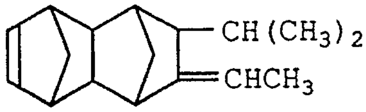

8-Ethylidene-9-isopropyltetracyclo $[4.4.0.1^{2,5}.1^{7,10}]$-3-dodecene

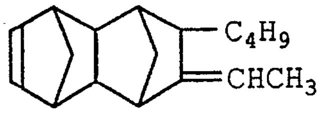

8-Ethylidene-9-butyltetracyclo $[4.4.0.1^{2,5}.1^{7,10}]$-3-dodecene

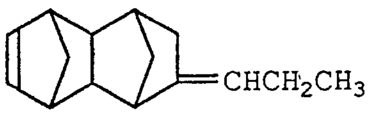

8-n-Propylidenetetracyclo $[4.4.0.1^{2,5}.1^{7,10}]$-3-dodecene

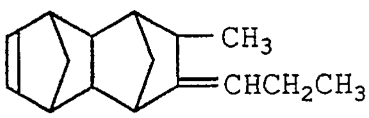

8-n-Propylidene-9-methyltetracyclo $[4.4.0.1^{2,5}.1^{7,10}]$-3-dodecene

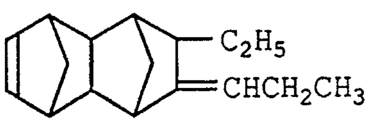

8-n-Propylidene-9-ethyltetracyclo $[4.4.0.1^{2,5}.1^{7,10}]$-3-dodecene

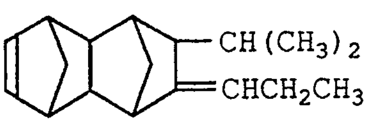

8-n-Propylidene-9-isopropyltetra-cyclo $[4.4.0.1^{2,5}.1^{7,10}]$-3-dodecene

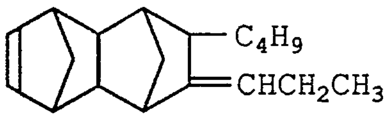

8-n-Propylidene-9-butyltetracyclo[4.4.0.1$^{2,5}$.1$^{7,10}$]-3-dodecene

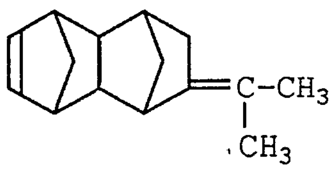

8-Isopropylidenetetracyclo[4.4.0.1$^{2,5}$.1$^{7,10}$]-3-dodecene

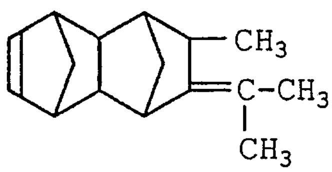

8-Isopropylidene-9-methyltetra-cyclo[4.4.0.1$^{2,5}$.1$^{7,10}$]-3-dodecene

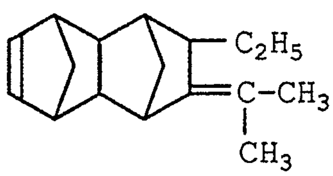

8-Isopropylidene-9-ethyltetracyclo[4.4.0.1$^{2,5}$.1$^{7,10}$]-3-dodecene

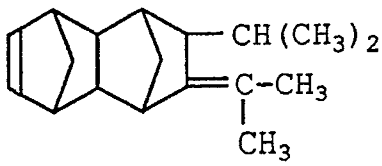

8-Isopropylidene-9-isopropyltetracyclo[$4.4.0.1^{2,5}.1^{7,10}$]-3-dodecene

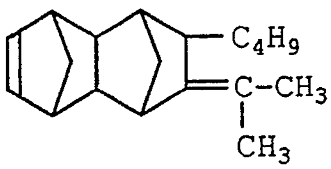

8-Isopropylidene-9-butyltetracyclo[$4.4.0.1^{2,5}.1^{7,10}$]-3-dodecene

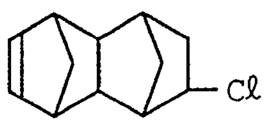

8-Chlorotetracyclo[$4.4.0.1^{2,5}.1^{7,10}$]-3-dodecene

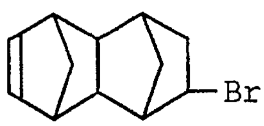

8-Bromotetracyclo[$4.4.0.1^{2,5}.1^{7,10}$]-3-dodecene

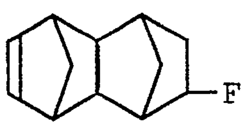

8-Fluorotetracyclo[$4.4.0.1^{2,5}.1^{7,10}$]-3-dodecene

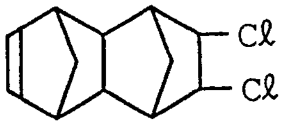

8,9-Dichlorotetracyclo[$4.4.0.1^{2,5}.1^{7,10}$]-3-dodecene

Hexacyclo[$6.6.1.1^{3,6}.1^{10,13}.0^{2,7}.0^{9,14}$]-4-heptadecene derivative including such as those mentioned below.

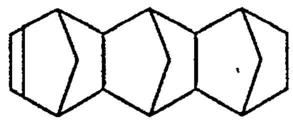

Hexacyclo[6.6.1.$1^{3,6}$.$1^{10,13}$.$0^{2,7}$.$0^{9,14}$]-4-heptadecene

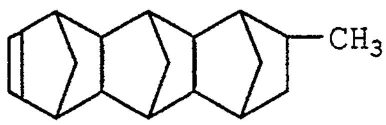

12-Methylhexacyclo[6.6.1.$1^{3,6}$.$1^{10,13}$.$0^{2,7}$.$0^{9,14}$]-4-heptadecene

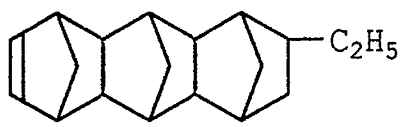

12-Ethylhexacyclo[6.6.1.$1^{3,6}$.$1^{10,13}$.$0^{2,7}$.$0^{9,14}$]-4-heptadecene

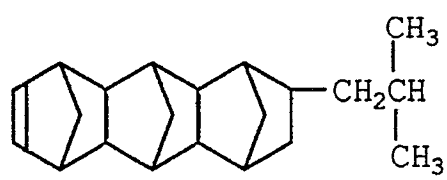

12-Isobutylhexacyclo[6.6.1.$1^{3,6}$.$1^{10,13}$.$0^{2,7}$.$0^{9,14}$]-4-heptadecene

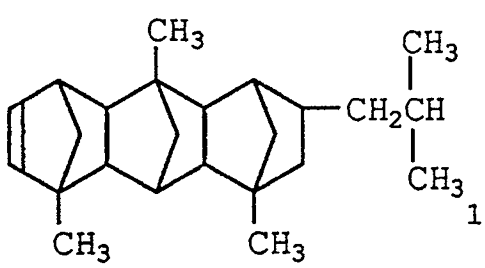

1,6,10-Trimethyl-12-isobutylhexacyclo[6.6.1.$1^{3,6}$.$1^{10,13}$.$0^{2,7}$.$0^{9,14}$]-4-heptadecene

Octacyclo[8.8.0.$1^{2,9}$.$1^{4,7}$.$1^{11,18}$.$1^{13,16}$.$0^{3,8}$.$0^{12,17}$]-5-docosene derivative including such as those mentioned below.

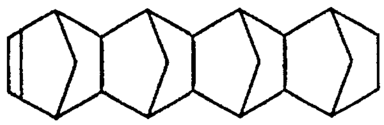

Octacyclo[8.8.0.$1^{2,9}$.$1^{4,7}$.$1^{11,18}$.$1^{13,16}$.$0^{3,8}$.$0^{12,17}$]-5-docosene

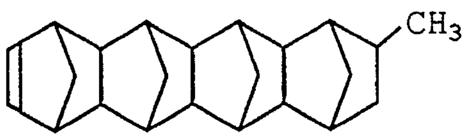

15-Methyloctacyclo[8.8.0.$1^{2,9}$.$1^{4,7}$.$1^{11,18}$.$1^{13,16}$.$0^{3,8}$.$0^{12,17}$]-5-docosene

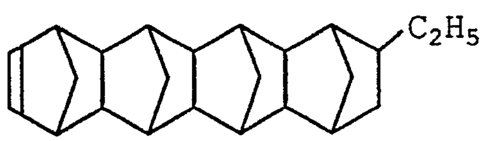

15-Ethyloctacyclo[8.8.0.$1^{2,9}$.$1^{4,7}$.$1^{11,18}$.$1^{13,16}$.$0^{3,8}$.$0^{12,17}$]-5-docosene

Pentacyclo[6.6.1.$1^{3,6}$.$0^{2,7}$.$0^{9,14}$]-4-hexadecene derivative including such as those mentioned below.

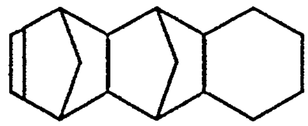

Pentacyclo[6.6.1.1$^{3,6}$.0$^{2,7}$.0$^{9,14}$]-4-hexadecene

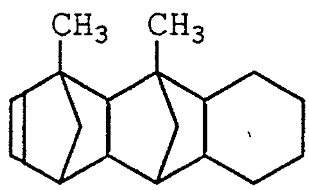

1,3-Dimethylpentacyclo[6.6.1.1$^{3,6}$.0$^{2,7}$.0$^{9,14}$]-4-hexadecene

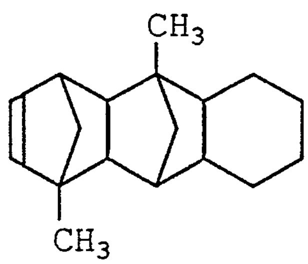

1,6-Dimethylpentacyclo[6.6.1.1$^{3,6}$.0$^{2,7}$.0$^{9,14}$]-4-hexadecene

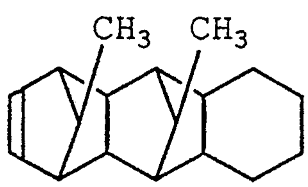

15,16-Dimethylpentacyclo[6.6.1.1$^{3,6}$.0$^{2,7}$.0$^{9,14}$]-4-hexadecene

Heptacyclo-5-eicosene derivative or heptacyclo-5-heneicosene derivative including such as those mentioned below.

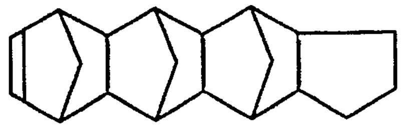

Heptacyclo[8.7.0.1$^{2,9}$.1$^{4,7}$.1$^{11,17}$.0$^{3,8}$.0$^{12,16}$]-5-eicosene

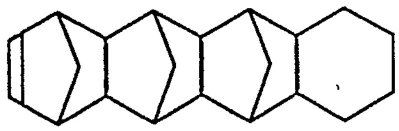

Heptacyclo[8.7.0.1$^{2,9}$.1$^{4,7}$.1$^{11,18}$.0$^{3,8}$.0$^{12,17}$]-5-heneicosene

Tricyclo[4.3.0.1$^{2,5}$]-3-decene derivative including such as those mentioned below.

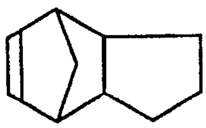

Tricyclo[4.3.0.1$^{2,5}$]-3-decene

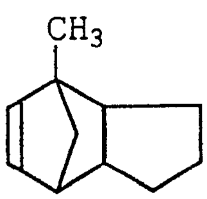

2-Methyltricyclo[4.3.0.1$^{2,5}$]-3-decene

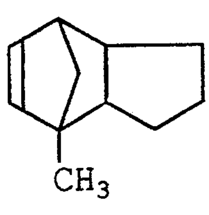

5-Methyltricyclo[4.3.0.1$^{2,5}$]-3-decene

Tricyclo[4.4.0.1$^{2,5}$]-3-undecene derivative including such as those mentioned below.

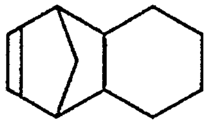

Tricyclo[4.4.0.$1^{2,5}$]-3-undecene

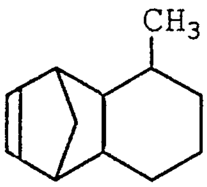

10-Methyltricyclo[4.4.0.$1^{2,5}$]-3-undecene

Pentacyclo[6.5.1.$1^{3,6}$.$0^{2,7}$.$0^{9,13}$]-4-pentadecene derivative including such as those mentioned below.

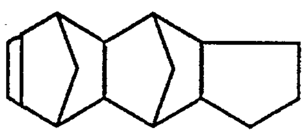

Pentacyclo[6.5.1.$1^{3,6}$.$0^{2,7}$.$0^{9,13}$]-4-pentadecene

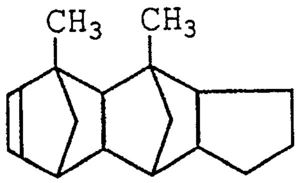

1,3-Dimethylpentacyclo[6.5.1.1$^{3,6}$.0$^{2,7}$.0$^{9,13}$]-4-pentadecene

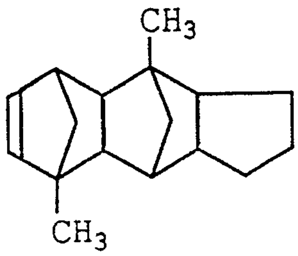

1,6-Dimethylpentacyclo[6.5.1.1$^{3,6}$.0$^{2,7}$.0$^{9.13}$]-4-pentadecene

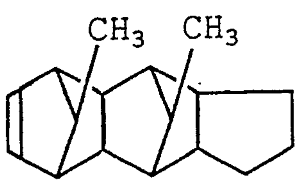

14,15-Dimethylpentacyclo[6.5.1.1$^{3,6}$.0$^{2,7}$.0$^{9,13}$]-4-pentadecene

Diene compound including such as mentioned below.

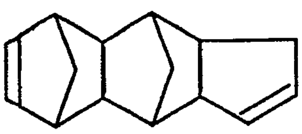

Pentacyclo[6.5.1.1$^{3,6}$.0$^{2,7}$.0$^{9,13}$]-4,10-pentadecadiene

Pentacyclo[7.4.0.1$^{2,5}$.1$^{9,12}$.0$^{8,13}$]-3-pentadecene derivative including such as those mentioned below.

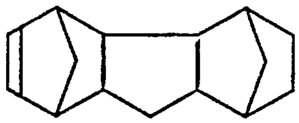

Pentacyclo[7.4.0.$1^{2,5}$.$1^{9,12}$.$0^{8,13}$]-3-pentadecene

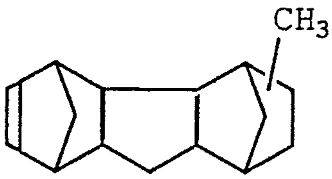

Methyl-substituted pentacyclo[7.4.0.$1^{2,5}$.$1^{9,12}$.$0^{8,13}$]-3-pentadecene

Heptacyclo[8.7.0.$1^{3,6}$.$1^{10,17}$.$1^{12,15}$.$0^{2,7}$.$0^{11,16}$]-4-eicosone derivative including such as those mentioned below.

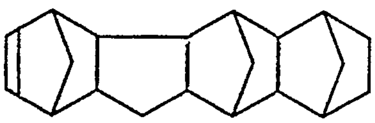

Heptacyclo[8.7.0.$1^{3,6}$.$1^{10,17}$.$1^{12,15}$.$0^{2,7}$.$0^{11,16}$]-4-eicosene

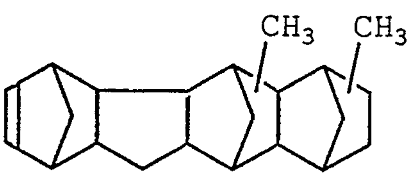

Dimethyl-substituted heptacyclo[8.7.0.$1^{3,6}$.$1^{10,17}$.$1^{12,15}$.$0^{2,7}$.$0^{11,16}$]-4-eicosene

Nocacyclo[10.9.1.$1^{4,7}$.$1^{13,20}$.$1^{15,18}$.$0^{3,8}$.$0^{2,10}$.$0^{12,21}$.$0^{14,19}$]-5-pentacosene derivative including such as those mentioned below.

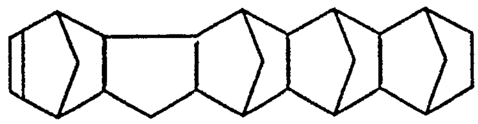

Nonacyclo$[10.9.1.1^{4,7}.1^{13,20}.1^{15,18}.0^{3,8}.0^{2,10}.0^{12,21}.0^{14,19}]$-5-pentacosene

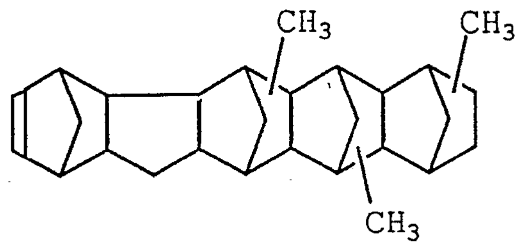

Trimethyl-substituted nonacyclo $[10.9.1.1^{4,7}.1^{13,20}.1^{15,18}.0^{3,8}.0^{2,10}.0^{12,21}.0^{14,19}]$-5-pentacosene

Pentacyclo $[8.4.0.1^{2,5}.1^{9,19}.0^{8,13}]$-3-hexadecene derivative including such as those mentioned below.

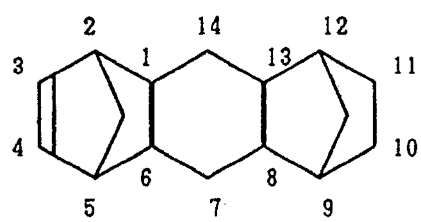

Pentacyclo $[8.4.0.1^{2,5}.1^{9,12}.0^{8,13}]$-3-hexadecene

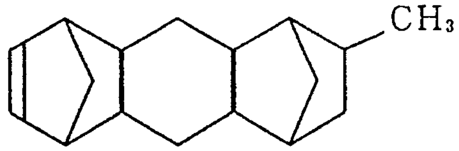

11-methyl-pentacyclo $[8.4.0.1^{2,5}.1^{9,12}.0^{8,13}]$-3-hexadecene

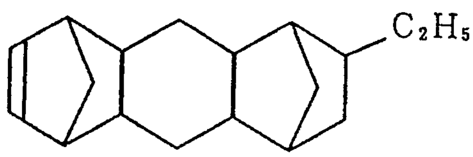

11-ethyl-pentacyclo $[8.4.0.1^{2,5}.1^{9,12}.0^{8,13}]$-3-hexadecene

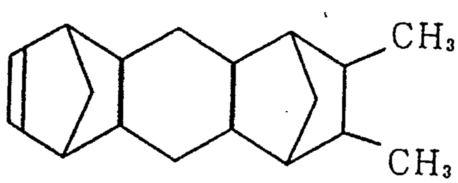

10,11-dimethyl-pentacyclo $[8.4.0.1^{2,5}.1^{9,12}.0^{8,13}]$-3-hexadecene

Heptacyclo $[8.8.0.1^{4,7}.1^{11,18}.1^{13,16}.0^{3,8}.0^{12,17}]$-5-heneicosene derivative including such as those mentioned below.

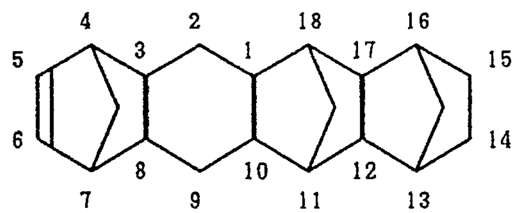

Heptacyclo $[8.8.0.1^{4,7}.1^{11,18}.1^{13,16}.0^{3,8}.0^{12,17}]$-5-heneicosene

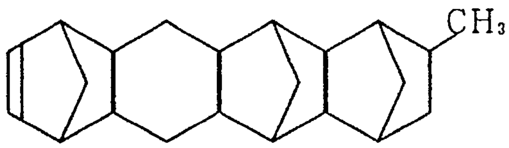

15-methyl-heptacyclo [8.8.0.$1^{4,7}$.$1^{11,18}$.$1^{13,16}$.$0^{3,8}$.$0^{12,17}$]-5-heneicosene

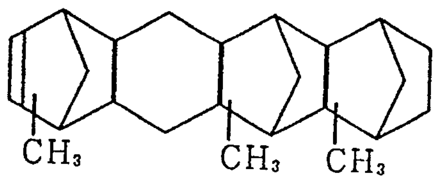

Trimethyl-substituted-heptacyclo [8.8.0.$1^{4,7}$.$1^{11,18}$.$1^{13,16}$.$0^{3,8}$.$0^{12,17}$]-5-heneicosene

Nonacyclo [10.10.1.$1^{5,8}$.$1^{14,21}$.$1^{16,19}$.$0^{2,11}$.$0^{4,9}$.$0^{13,22}$.$0^{15,20}$]-5-hexacosene derivative including such as mentioned below.

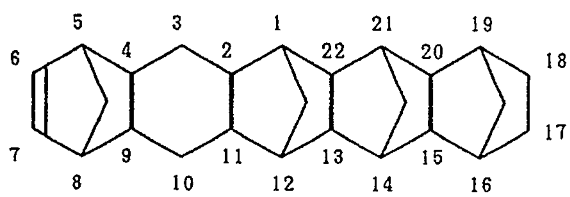

Nonacyclo [10.10.1.$1^{5,8}$.$1^{14,21}$.$1^{16,19}$.$0^{2,11}$.$0^{4,9}$.$0^{13,22}$.$0^{15,20}$]-5-hexacosene

The cycloolefins of the above-mentioned formula [II] used in the present invention include concretely such compounds as shown below.

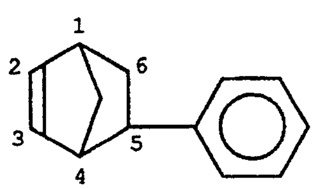

5-Phenyl-bicyclo[2.2.1]hept-2-ene

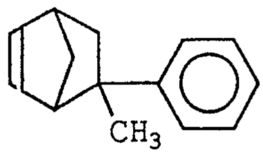

5-Methyl-5-phenyl-bicyclo[2.2.1] hept-2-ene

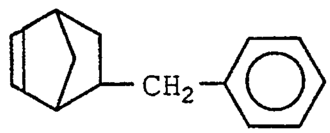

5-Benzyl-bicylo[2.2.1]hept-2-ene

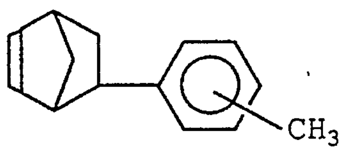

5-Tolyl-bicylo[2.2.1]hept-2-ene

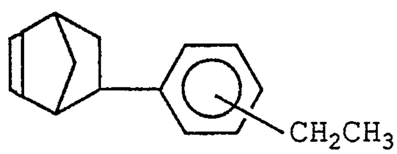

5-(Ethylphenyl)-bicyclo[2.2.1] hept-2-ene

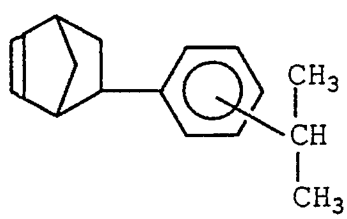

5-(Isopropylphenyl)-bicyclo[2.2.1] hept-2-ene

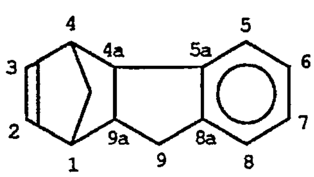

1,4-Methano-1,4.4a.9a-tetrahydro- fluorene

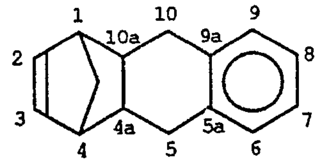

1,4-Methano-1,4,4a,5,10,10a-hexahydroanthracene

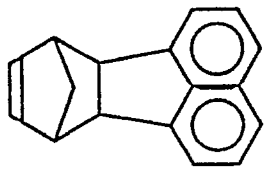

Cyclopentadiene-acenaphthylene adduct

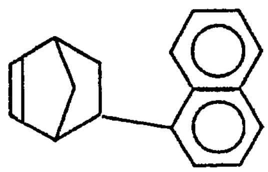

5-(α-Naphthyl)-bicyclo[2.2.1] hept-2-ene

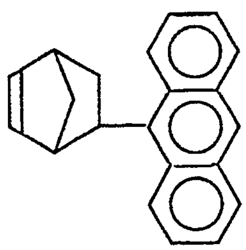

5-(Antracenyl)-bicyclo[2.2.1] hept-2-ene

The cycloolefin random copolymer comprising ethylene units and the aforementioned cycloolefin units as essential component may contain, if necessary, in addition to these two essential component, other copolymerizable unsaturated monomer units within limits prejudicial to the object of the present invention. Such copolymerizable unsaturated monomer units useful in the cycloolefin random copolymer may be derived from monomers including α-olefins of 3-20 carbon atoms such as propylene, 1-butene, 4-methyl-1-pentene, 1-hexene, 1-octene, 1-decene, 1-dodecene, 1-tetradecene, 1-hexadecene, 1-octadecene and 1-eicosane, and these unsaturated monomers may be used, for example, in amounts less than equimolar amount of the ethylene units present in the resulting random copolymer.

In the cycloolefin random copolymer [A] as mentioned above, a recurring unit (a) derived from ethylene is present in a proportion of 40-85 mol%, preferably 50-75 mol%, and a recurring unit (b) derived from the cycloolefin is present in a proportion of 15-60 mol%, preferably 25-50 mol%, and the recurring units (a) and (b) are arranged substantially linear at random. The constitution in the resulting random copolymer of ethylene and cycloolefin was determined by $^{13}C$-NMR. The fact that this random copolymer is substantially linear and has no gel-like crosslinked structure can be confirmed by the fact that the copolymer completely dissolves in decalin at 135° C.

The cycloolefin random copolymer [A] has an intrinsic viscosity [η], as measured in decalin at 135° C, of 0.01-10 dℓ/g, preferably 0.05-5 dℓ/g.

Further, compositions comprising two or more cycloolefin type random copolymers having different physical properties such as softening temperatures or compositions comprising the cycloolefin type random

copolymer and other non-rigid copolymer described below can be used for the cycloolefin type random copolymer layer of the present invention. Furthermore, compositions comprising the cycloolefin type random copolymer and olefin homopolymer such as polyethylene, polypropylene and poly-4-methyl-pentene-1 can be used for the back-up layer.

Concrete examples of such cycloolefin type random copolymer compositions include those comprising [A-1] a cycloolefin type random copolymer containing an ethylene component and a cycloolefin component derived from a monomer represented by the aforesaid general formula [I] or [II] and having a softening temperature (TMA) of not lower than 70° C and [B] at least one non-rigid copolymer (hereinafter referred to sometimes as component B) selected from the following copolymers [B-1] to [B-4].

[B-1]: A cycloolefin type random copolymer comprising an ethylene component, at least one other α-olefin component and a cycloolefin component represented by the above-described general formula [I] or [II] and having a softening temperature (TMA) of below 70° C.

[B-2]: A non-crystalline or low-crystalline α-olefin elastomeric copolymer comprising at least two α-olefins.

[B-3]: An α-olefin/diene elastomeric copolymer comprising at least two α-olefins and at least one non-conjugated diene.

[B-4]: An aromatic vinyl hydrocarbon/conjugated diene copolymer or a hydrogenated product thereof.

In these compositions, the total amount of the component [B] is usually 5 to 100 part by weight per 100 parts by weight of the component [A-1].

Both the cycloolefin type random copolymers [A-1] and [B-1] which constitute the cycloolefin type random copolymer composition are cycloolefin type random copolymers comprising an ethylene component and a specific cycloolefin component. The cycloolefin component is represented by the above-described formula [I] or [II] and forms a structure represented by the general formula [III] or [IV] in cycloolefin type random copolymer.

The cycloolefin type random copolymer [A-1] as mentioned above may contain, in addition to the above-described ethylene component and cycloolefin component, other copolymerizable unsaturated monomer components in such an amount that the purpose of the present invention is not adversely affected.

In the cycloolefin type random copolymer [A-1] constituting the compositions as mentioned above, the range (mol%) of a recurring unit (a) derived from the ethylene unit and a recurring unit (b) derived from the cycloolefin component to be present and the intrinsic viscosity [$\eta$] thereof as measured in decalin at 135° C are the same as those of the above-described cycloolefin type random copolymer. The recurring units (a) and (b) are arranged substantially linear at random. The fact that the cycloolefin type random copolymer (A-1) is substantially linear and has no gel-like crosslinked structure can be confirmed by the fact that the copolymer completely dissolves in decalin at 135° C.

The cycloolefin type random copolymer [A-1] has a softening temperature (TMA) of not lower than 70° C, preferably 90 to 250° C, more preferably 100 to 200° C as measured by a thermal mechanical analyzer. The cycloolefin type random copolymer (A-1) has a glass transition temperature (Tg) of usually 50 to 230° C, preferably 70 to 210° C.

The cycloolefin type random copolymer has a crystallinity index of usually 0 to 10%, preferably 0 to 7%, particularly preferably 0 to 5% as measured by X-ray diffractometry.

The cycloolefin type random copolymer [B-1] which constitutes the cycloolefin type random copolymer composition may contain at least one other copolymerizable unsaturated monomer component in addition to the ethylene component and the cycloolefin component as mentioned above.

In the cycloolefin type random copolymer [B-1] as mentioned above, a recurring unit (a) derived from ethylene is present in a proportion of 40 to 99 mol%, preferably 75 to 98 mol%, a recurring unit (b) derived from the cycloolefin component is present in a proportion of 1 to 40 mol%, preferably 1 to 15 mol% and a recurring unit (c) derived from at least one α-olefin component other than ethylene is present in a proportion of 1 to 45 mol%, preferably 1 to 35 mol%, and the recurring unit (a) derived from the ethylene component, the recurring unit (b) derived from the cycloolefin component and the recurring unit (c) derived from at least one α-olefin component other than ethylene are arranged substantially linear at random. The fact that the cycloolefin type random copolymer [B-1] is substantially linear and has no gel-like crosslinked structure can be confirmed by the fact that the copolymer completely dissolves in decalin at 135° C.

The α-olefin elastomeric copolymer [B-2] which constitutes the cycloolefin type random copolymer composition is a non-crystalline or low-crystalline copolymer comprising at least two α-olefins. Examples thereof concretely include an ethylene/α-olefin copolymer rubber [B-2-i] and a propylene/α-olefin copolymer rubber [B-2-ii]. An olefin having 3 to 20 carbon atoms is usually used as the olefin forming the ethylene/α-olefin copolymer rubber [B-2-i]. There may be mentioned propylene, 1-butene, 1-pentene, 1-hexene, 4-methyl-1-pentene, 1-octene, 1-decene and a mixture thereof as concrete examples of the α-olefin. Of these

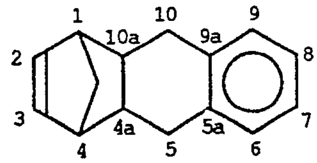

1,4-Methano-1,4,4a,5,10,10a-hexahydroanthracene

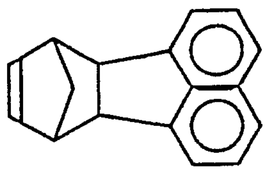

Cyclopentadiene-acenaphthylene adduct

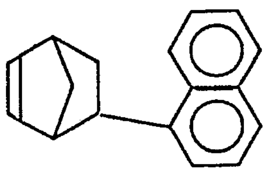

5-(α-Naphthyl)-bicyclo[2.2.1] hept-2-ene

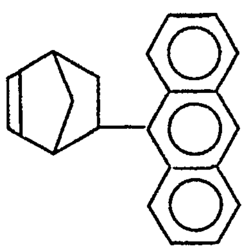

5-(Antracenyl)-bicyclo[2.2.1] hept-2-ene

The cycloolefin random copolymer comprising ethylene units and the aforementioned cycloolefin units as essential component may contain, if necessary, in addition to these two essential component, other copolymerizable unsaturated monomer units within limits prejudicial to the object of the present invention. Such copolymerizable unsaturated monomer units useful in the cycloolefin random copolymer may be derived from monomers including α-olefins of 3-20 carbon atoms such as propylene, 1-butene, 4-methyl-1-pentene, 1-hexene, 1-octene, 1-decene, 1-dodecene, 1-tetradecene, 1-hexadecene, 1-octadecene and 1-eicosane, and these unsaturated monomers may be used, for example, in amounts less than equimolar amount of the ethylene units present in the resulting random copolymer.

In the cycloolefin random copolymer [A] as mentioned above, a recurring unit (a) derived from ethylene is present in a proportion of 40-85 mol%, preferably 50-75 mol%, and a recurring unit (b) derived from the cycloolefin is present in a proportion of 15-60 mol%, preferably 25-50 mol%, and the recurring units (a) and (b) are arranged substantially linear at random. The constitution in the resulting random copolymer of ethylene and cycloolefin was determined by $^{13}C$-NMR. The fact that this random copolymer is substantially linear and has no gel-like crosslinked structure can be confirmed by the fact that the copolymer completely dissolves in decalin at 135 °C.

The cycloolefin random copolymer [A] has an intrinsic viscosity [η], as measured in decalin at 135 °C, of 0.01-10 dℓ/g, preferably 0.05-5 dℓ/g.

Further, compositions comprising two or more cycloolefin type random copolymers having different physical properties such as softening temperatures or compositions comprising the cycloolefin type random

copolymer and other non-rigid copolymer described below can be used for the cycloolefin type random copolymer layer of the present invention. Furthermore, compositions comprising the cycloolefin type random copolymer and olefin homopolymer such as polyethylene, polypropylene and poly-4-methylpentene-1 can be used for the back-up layer.

Concrete examples of such cycloolefin type random copolymer compositions include those comprising [A-1] a cycloolefin type random copolymer containing an ethylene component and a cycloolefin component derived from a monomer represented by the aforesaid general formula [I] or [II] and having a softening temperature (TMA) of not lower than 70°C and [B] at least one non-rigid copolymer (hereinafter referred to sometimes as component B) selected from the following copolymers [B-1] to [B-4].

[B-1]: A cycloolefin type random copolymer comprising an ethylene component, at least one other α-olefin component and a cycloolefin component represented by the above-described general formula [I] or [II] and having a softening temperature (TMA) of below 70°C.

[B-2]: A non-crystalline or low-crystalline α-olefin elastomeric copolymer comprising at least two α-olefins.

[B-3]: An α-olefin/diene elastomeric copolymer comprising at least two α-olefins and at least one non-conjugated diene.

[B-4]: An aromatic vinyl hydrocarbon/conjugated diene copolymer or a hydrogenated product thereof.

In these compositions, the total amount of the component [B] is usually 5 to 100 part by weight per 100 parts by weight of the component [A-1].

Both the cycloolefin type random copolymers [A-1] and [B-1] which constitute the cycloolefin type random copolymer composition are cycloolefin type random copolymers comprising an ethylene component and a specific cycloolefin component. The cycloolefin component is represented by the above-described formula [I] or [II] and forms a structure represented by the general formula [III] or [IV] in cycloolefin type random copolymer.

The cycloolefin type random copolymer [A-1] as mentioned above may contain, in addition to the above-described ethylene component and cycloolefin component, other copolymerizable unsaturated monomer components in such an amount that the purpose of the present invention is not adversely affected.

In the cycloolefin type random copolymer [A-1] constituting the compositions as mentioned above, the range (mol%) of a recurring unit (a) derived from the ethylene unit and a recurring unit (b) derived from the cycloolefin component to be present and the intrinsic viscosity [$\eta$] thereof as measured in decalin at 135°C are the same as those of the above-described cycloolefin type random copolymer. The recurring units (a) and (b) are arranged substantially linear at random. The fact that the cycloolefin type random copolymer (A-1) is substantially linear and has no gel-like crosslinked structure can be confirmed by the fact that the copolymer completely dissolves in decalin at 135°C.

The cycloolefin type random copolymer [A-1] has a softening temperature (TMA) of not lower than 70°C, preferably 90 to 250°C, more preferably 100 to 200°C as measured by a thermal mechanical analyzer. The cycloolefin type random copolymer (A-1) has a glass transition temperature (Tg) of usually 50 to 230°C, preferably 70 to 210°C.

The cycloolefin type random copolymer has a crystallinity index of usually 0 to 10%, preferably 0 to 7%, particularly preferably 0 to 5% as measured by X-ray diffractometry.

The cycloolefin type random copolymer [B-1] which constitutes the cycloolefin type random copolymer composition may contain at least one other copolymerizable unsaturated monomer component in addition to the ethylene component and the cycloolefin component as mentioned above.

In the cycloolefin type random copolymer [B-1] as mentioned above, a recurring unit (a) derived from ethylene is present in a proportion of 40 to 99 mol%, preferably 75 to 98 mol%, a recurring unit (b) derived from the cycloolefin component is present in a proportion of 1 to 40 mol%, preferably 1 to 15 mol% and a recurring unit (c) derived from at least one α-olefin component other than ethylene is present in a proportion of 1 to 45 mol%, preferably 1 to 35 mol%, and the recurring unit (a) derived from the ethylene component, the recurring unit (b) derived from the cycloolefin component and the recurring unit (c) derived from at least one α-olefin component other than ethylene are arranged substantially linear at random. The fact that the cycloolefin type random copolymer [B-1] is substantially linear and has no gel-like crosslinked structure can be confirmed by the fact that the copolymer completely dissolves in decalin at 135°C.

The α-olefin elastomeric copolymer [B-2] which constitutes the cycloolefin type random copolymer composition is a non-crystalline or low-crystalline copolymer comprising at least two α-olefins. Examples thereof concretely include an ethylene/α-olefin copolymer rubber [B-2-i] and a propylene/α-olefin copolymer rubber [B-2-ii]. An olefin having 3 to 20 carbon atoms is usually used as the olefin forming the ethylene/α-olefin copolymer rubber [B-2-i]. There may be mentioned propylene, 1-butene, 1-pentene, 1-hexene, 4-methyl-1-pentene, 1-octene, 1-decene and a mixture thereof as concrete examples of the α-olefin. Of these

compounds, propylene or 1-butene is particularly preferable.

An α-olefin having 4 to 30 carbon atoms is usually used as the α-olefin forming the propylene/α-olefin copolymer rubber [B-2-ii]. There may be mentioned 1-butene, 1-pentene, 1-hexene, 4-methyl-1-pentene, 1-octene, 1-decene and mixtures thereof as concrete examples of the α-olefin. Of these compounds, 1-butene is particularly preferred.

In the above-described ethylene/α-olefin copolymer rubber [B-2-i], the molar ratio of ethylene/α-olefin varies depending on the type of α-olefin, but is usually 30/70 -95/5, preferably 50/50 - 95/5. In the case where the α-olefin is propylene, the ratio is preferably 50/50 - 90/10. In the case where the α-olefin is one having 4 or more carbon atoms, the ratio is preferably 80/20 - 95/5.

In the above-described propylene/α-olefin copolymer rubber [B-2-i], the molar ratio of propylene/α-olefin varies depending on the type of the α-olefin, but is preferably 50/50 - 95/5. In the case where the α-olefin is 1-butene, the ratio is preferably 50/50 - 90/10. In the case where the α-olefin is one having 5 or more carbon atoms, the ratio is preferably 80/20 - 95/5.

The α-olefin elastomeric copolymer [B-2] has a crystallinity index of usually 0 to 50%, preferably 0 to 25% as measured by X-ray diffractometry.

The α-olefin elastomeric copolymer [B-2] has an intrinsic viscosity [η] of usually 0.2 to 10 dℓ/g, preferably 1 to 5 dℓ/g as measured in decalin at 135° C. Further, the copolymer has a density of 0.82 to 0.96 g/cm$^3$, preferably 0.84 to 0.92 g/cm$^3$.

Further, the α-olefin elastomeric copolymer [B-2] may be a copolymer which is graft modified with 0.01 to 5% by weight, preferably 0.1 to 4% by weight of a graft monomer selected from unsaturated carboxylic acids and derivatives thereof.

Examples of the unsaturated carboxylic acids or derivatives which can be used to modify the α-olefin elastomeric copolymer [B-2] include unsaturated carboxylic acids such as acrylic acid, maleic acid, fumaric acid, tetrahydrophthalic acid, itaconic acid, citraconic acid, crotonic acid, isocrotonic acid and nadic acid (trade name, endocis bicyclo[2,2,1]hept-5-ene-2,3-dicarboxylic acid) and derivatives such as acid halides, amides, imides, anhydrides and esters. Concrete examples of the above-described derivatives include maleyl chloride, maleimide, maleic anhydride, citraconic anhydride, monomethyl maleate and glycidyl maleate. Of these compounds, unsaturated carboxylic acids or acid anhydrides thereof are preferred and maleic acid, nadic acid and acid anhydrides thereof are particularly preferred.

The modified α-olefin elastomeric copolymer can be prepared by grafting a graft monomer selected from the unsaturated carboxylic acids and derivatives thereof to the α-olefin elastomeric copolymer [B-2] by various known methods. For example, there are a method wherein the α-olefin elastomeric copolymer is molten and a graft monomer is added thereto to carry out graft polymerization and a method wherein the copolymer is dissolved in a solvent and a graft monomer is added thereto to carry out graft polymerization. It is preferred that the graft polymerization is carried out in the presence of a radical initiator to graft effectively the graft monomer to the copolymer. The graft reaction is usually carried out at a temperature of 60 to 350° C. The radical initiator is used in an amount of 0.001 to 1 part by weight per 100 parts by weight of the ethylene/α-olefin random copolymer.

Examples of the radical initiator include organic peroxides and organic peresters such as benzoyl peroxide, dicyclobenzoyl peroxide, dicumyl peroxide, di-tert-butyl peroxide, 2,5-dimethyl-2,5-di(peroxide benzoate)hexine-3, 1,4-bis(tert-butyl peroxyisopropyl)benzene, lauroyl peroxide, tert-butyl peracetate, 2,5-dimethyl-2,5-di(tert-butylperoxy)hexine-3, 2,5-dimethyl-2,5-di(tert-butylperoxy)hexane, tert-butyl perbenzoate, tert-butyl perphenyl acetate, tert-butyl perisobutyrate, tert-butyl per-sec-octoate, tert-butyl perpivalate and cumyl perpivalate and tert-butyl perdiethyl acetate; and azo compounds such as azobisisobutyronitrile and dimethylazoisobutyrate. Of these compounds, preferred are dicumyl peroxide, di-tert-butyl peroxide, 2,5-dimethyl-2,5-di(tert-butylperoxy)hexane-3, 2,5-dimethyl-2,5-di(tert-butylperoxy)hexane and 1,4-bis(tert-butylperoxyisopropyl)benzene.

Among the α-olefin elastomeric copolymers [B-2], preferred are an ethylene/propylene random copolymer having an ethylene content of 35 to 50 mol% and a crystallinity index of not higher than 5% and a modified copolymer obtained by grafting a graft monomer selected from unsaturated carboxylic acids and derivatives thereof to the ethylene/α-olefin copolymer, because an effect of improving impact strength is most remarkable.

The α-olefin/diene elastomeric copolymer [B-3] which constitues the cycloolefin type random copolymer composition is a copolymer comprising at least two α-olefins and at least one non-conjugated diene. There can be mentioned an ethylene/α-olefin/diene copolymer rubber [B-3-i] and a propylene/α-olefin/diene copolymer rubber [B-3-ii] as concrete examples of the copolymer [B-3].

An α-olefin having 3 to 20 carbon atoms is usually used as the α-olefin for forming the ethylene/α-olefin/diene copolymer rubber [B-3-i]. Examples of the α-olefin include propylene, 1-butene, 1-pentene, 1-hexene, 4-methyl-1-pentene, 1-octene, 1-decene and a mixture thereof. Of these compounds, propylene and 1-butene are particularly preferred.

Examples of the α-olefin for forming the propylene/α-olefin/diene copolymer rubber [B-3-ii] include α-olefins having 4 to 20 carbon atoms such as 1-butene, 1-pentene, 4-methyl-1-pentene, 1-octene, 1-decene and a mixture thereof. Of these compounds, 1-butene is particularly preferable.

Examples of the diene component of the ethylene/α-olefin/diene copolymer rubber [B-3-i] or the propylene/α-olefin/diene copolymer rubber [B-3-ii] include chain non-conjugated dienes such as 1,4-hexadiene, 1,6-octadiene, 2-methyl-1,5-hexadiene, 6-methyl-1,5-heptadiene and 7-methyl-1,6-octadiene, cyclic non-conjugated dienes such as cyclohexadiene, dicyclopentadiene, methyltetrahydroindene, 5-vinylnorbornene, 5-ethylidene-2-norbornene, 5-methylene-2-norbornene, 5-isopropylidene-2-norbornene and 6-chloromethyl-5-isopropenyl-2-norbornene; and 2,3-isopropylidene-5-norbornene, 2-ethylidene-3-isopropylidene-5-norbornene and 2-propenyl-2,2-norbornadiene. Of these compounds, 1,4-hexadiene and the cyclic non-conjugated dienes, particularly dicyclopentadiene or 5-ethylidene-2-norbornene, 5-vinyl-2-norbornene, 5-methylene-2-norbornene, 1,4-hexadiene and 1,4-octadiene are preferred.

In the ethylene/α-olefin/diene copolymer rubber [B-3-i], the molar ratio of ethylene/α-olefin varies depending on the type of the α-olefin, but is preferably 50/50 ~ 95/5. In the case where α-olefin is propylene, the ratio is preferably 50/50 ~ 90/10. In the case where α-olefin is one having 4 or more carbon atoms, the ratio is preferably 80/20 ~ 95/5.

The copolymer rubber has a diene content of usually 0.5 to 10 mol%, preferably 0.5 to 5 mol%.

In the propylene/α-olefin/diene copolymer rubber [B-3-ii], the molar ratio of propylene/α-olefin varies depending on the type of the α-olefin, but is preferably 50/50 ~ 95/5. In the case where α-olefin is 1-butene, the molar ratio is preferably 50/50 ~ 90/10. In the case where α-olefin is one having 5 or more carbon atoms, the ratio is preferably 80/20 ~ 95/5.

The copolymer rubber has a diene component content of 0.5 to 10 mol%, preferably 0.5 to 5 mol%.

The α-olefin/diene elastomeric copolymer [B-3] as mentioned above has a crystallinity index of usually 0 to 10%, preferably 0 to 5% as measured by X-ray diffractometry.

The α-olefin/diene elastomeric copolymer [B-3] has an intrinsic viscosity [η] of 0.01 to 10 dℓ/g, preferably 1 to 5 dℓ/g as measured in decalin at 135 °C, an iodine value of 1 to 30, preferably 5 to 25 and a density of 0.82 to 1.00 g/cm$^3$, preferably 0.85 to 0.90 g/cm$^3$.

Concrete examples of the aromatic vinyl hydrocarbon/conjugated diene copolymer or a hydrogenated product thereof [B-4] which constitutes the cycloolefin type random copolymer composition include a styrene/butadiene copolymer rubber [B-4-i], a styrene/butadiene/styrene copolymer rubber [B-4-ii], a styrene/isoprene block copolymer rubber [B-4-iii], a styrene/isoprene/styrene block copolymer rubber [B-4-iv], a hydrogenated styrene/butadiene/styrene block copolymer rubber [B-4-v] and a hydrogenated styrene/isoprene/styrene copolymer rubber [B-4-vi].

In the styrene/butadiene copolymer rubber [B-4-i], the molar ratio of styrene/butadiene is preferably 0/100 ~ 60/40.

In the styrene/butadiene/styrene block copolymer rubber [B-4-ii], the molar ratio of styrene/butadiene is 0/100 ~ 60/40. With regard to the degree of polymerization of each block, it is preferred that styrene block is about 0 to 5000 and butadiene block is about 10 to 20,000.

In the styrene/isoprene block copolymer rubber [B-4-iii], the molar ratio of styrene/isoprene is preferably 0/100 ~ 60/40.

In the styrene/isoprene/styrene block copolymer rubber [B-4-iv], the molar ratio of styrene/isoprene is preferably 0/100 ~ 60/40. With regard to the degree of polymerization of each block, it is preferred that styrene block is about 0 to 5000 and isoprene block is about 10 to 20000.

The hydrogenated styrene/butadiene/styrene block copolymer rubber is a copolymer rubber obtained by partially hydrogenating double bonds left in the above-described styrene/butadiene/styrene block copolymer and the ratio by weight of styrene portion to rubber portion (styrene/rubber) is preferably 0/100 ~ 50/50.

The hydrogenated styrene/isoprene/styrene block copolymer rubber is a copolymer rubber obtained by partially hydrogenating double bonds left in the above-described styrene/isoprene/styrene block copolymer, and the ratio by weight of styrene portion to rubber portion (styrene/rubber) is preferably 0/100 ~ 50/50.

The aromatic vinyl hydrocarbon/conjugated diene block copolymer [B-4] as mentioned above has a weight-average molecular weight $\overline{M}w$ of usually 500 to 2,000,000, preferably 10,000 to 1,000,000 as measured by GPC (gel permeation chromatography in o-di-chlorobenzene at 140 °C) and a density of generally 0.80 to 1.10 g/cm$^3$, preferably 0.88 to 0.96 g/cm$^3$.

The cycloolefin type random copolymer composition of the present invention may contain one or more of the above-described non-rigid copolymers [B-1] to [B-4]. When the non-rigid copolymers are used in

combination, any combination of the non-rigid copolymers [B-1] to [B-4] may be used.

In the cycloolefin type random copolymer composition as mentioned above, the non-rigid copolymer [B] is present in an amount of usually 5 to 100 parts by weight, preferably 7 to 80 parts by weight, particularly preferably 10 to 70 parts by weight based on 100 parts by weight of the cycloolefin type random copolymer [A-1]. When the amount of the non-rigid copolymer [B] is less than 5 parts by weight based on 100 parts by weight of the cycloolefin type random copolymer [A-1], impact resistance is liable to be poor, though the resulting composition is superior in rigidity, while when the amount exceeds 100 parts by weight, rigidity is low and a balance between rigidity and impact strength is apt to be poor, though the resulting composition is superior in impact resistance.

## Modified olefin polymer layer

A modified olefin polymer obtained by modifying an olefin polymer with a modifier having a polar group is used for the back-up layer of the third parabolic antenna reflector of the present invention.

The modified olefin polymer layer may be formed from a foamed modified olefin polymer.

Examples of base polymers for the preparation of the modified olefin polymer as mentioned above include olefin homopolymers and copolymers of two or more olefins. Component units of such polymers can be derived from straight-chain, cyclic or branched-chain olefins having about 2 to 18 carbon atoms. Examples of such olefins include straight-chain olefins such as ethylene, propylene, 1-butene, 2-butene, 1-pentene, 2-pentene and 1-hexene; and branched-chain olefins such as 3-methyl-1-pentene, 1-hexene, 1-decene, 1-dodecene, 2-methyl-1-butene, 3-methyl-1-butene, 2-methyl-2-butene and 4-methyl-1-pentene. Of these compounds, propylene is preferable.

Examples of the copolymers of two or more olefins include bipolymers such as ethylene/$\alpha$-olefin copolymers (e.g., ethylene/propylene copolymer, ethylene/1-butene copolymer) propylene/1-butene copolymer, etc. and copolymers of ethylene with two or more other olefins such as terpolymers (e.g., ethylene/propylene/1-butene copolymer, etc.). The copolymers may be crystalline copolymers obtained by copolymerizing one or more compound having vinyl group such as vinyl acetate, vinyl chloride, vinyl alcohol, (meth)acrylic acid, (meth)acrylate, maleic acid, maleic anhydride, glycidyl maleate or the like in an amount of not more than 10 mol%, so long as the $\alpha$-olefins are main monomers. Of these copolymers, the ethylene/propylene copolymer can be preferably used.

These copolymers may be block copolymers or random copolymers.

The olefin polymers used in the present invention are usually crystalline and have a density of 0.89 to 0.98 g/cm$^3$, preferably 0.89 to 0.93 g/cm$^3$, an intrinsic viscosity [$\eta$] of usually 0.3 to 15 d$\ell$/g, preferably 0.4 to 10 d$\ell$/g as measured in decalin at 135°C and a melt flow rate (MFR: ASTM D 1238.L.) of usually 0.01 to 100 g/10 min, preferably 0.02 to 70 g/10 min.

In a case where olefin polymers having an MFR in the range described above, parabolic antenna reflectors having excellent impact resistance can be obtained.

The olefin polymers as mentioned above are graft-modified by a modifier having a polar group. Examples of the modifier include ethylenically unsaturated group-containing carboxylic acids, acid anhydrides thereof and derivatives thereof (hereinafter sometimes referred to simply as ethylenically unsaturated group-containing carboxylic acids, etc.), allyl glycidyl ether and/or vinyl glycidyl ether, etc.

Examples of the ethylenically unsaturated bond-containing carboxylic acids include unsaturated carboxylic acids such as acrylic acid, methacrylic acid, maleic acid, fumaric acid, tetrahydrophthalic acid, itaconic acid, citraconic acid, crotonic acid, isocrotonic acid and nadic acid (trade name, endo-cis bicyclo[2,2,1]hept-5-ene-2,3-dicarboxylic acid), acid anhydrides thereof and derivatives thereof such as acid halides, amides, imides, anhydrides and esters. Concrete examples of the above-described derivatives include malenyl chloride, maleimide, maleic anhydride, citraconic anhydride, methyl acrylate, methyl methacrylate, monomethyl maleate, dimethyl maleate and glycidyl maleate. Of these compounds, unsaturated carboxylic acids or acid anhydrides thereof are preferred, and maleic acid, nadic acid and acid anhydrides thereof are particularly preferred.

These ethylenically unsaturated bond-containing carboxylic acids, etc. may be used either alone or in combination.

Methods for graft-modifying the olefin polymers with the above-described modifiers include known methods such as a method (melting method) wherein an olefin polymer is molten and a modifier is added thereto to carry out graft copolymerization and a method (solvent method) wherein an olefin polymer is dissolved in a solvent and a modifier is added thereto to carry out graft copolymerization and the third

method (powder method) previously proposed by the Applicant. Of these methods, said third method (powder method) is preferable.

The powder method is illustrated below.

The term "polymer" in the powder method is meant both homopolymer and copolymer.

In the powder method, particles of the polyolefin polymers (polyolefins) are used. The polyolefin particles have an average particle diameter of usually 10 to 5000 μm, preferably 100 to 4000 μm, more preferably 300 to 3000 μm. Geometrical standard deviation which represents the particle size distribution of the polyolefin particles used in the powder method is, in the range of usually 1.0 to 2.0, preferably 1.0 to 1.5, particularly preferably 1.0 to 1.3.

As the polyolefin particles used in the powder method, those having the above-described characteristics are preferred. Though there is no particular limitation with regard to methods for preparing the particles having the above-described characteristics, it is preferred to use a method described hereinafter. Polyolefin particles obtained from the method described hereinafter give ash which contains transition metal component in an amount of usually not higher than 100 ppm, preferably not higher than 10 ppm, particularly preferably not higher than 5 ppm and halogen in an amount of usually not higher than 300 ppm, preferably not higher than 100 ppm, particularly preferably not higher than 50 ppm.

The polyolefin particles having the aforesaid characteristics can be obtained by polymerizing or copolymerizing α-olefins having 2 to 20 carbon atoms.

Examples of such α-olefins include ethylene, propylene, butene-1, pentene-1, 2-methylbutene-1, 3-methylbutene-1, hexene-1, 3-methylpentene-1, 4-methylpentene-1, 3,3-dimethylbutene-1, heptene-1, methylhexene-1, dimethylpentene-1, trimethylbutene-1, ethylpentene-1, octene-1, methylpentene-1, dimethylhexene-1, trimethylpentene-1, ethylhexene-1, methylethylpentene-1, diethylbutene-1, propylpentene-1, decene-1, methylnonene-1, dimethyloctene-1, trimethylheptene-1, ethyloctene-1, methylethylheptene-1, diethylhexene-1, dodecene-1 and hexadodecene-1.

Of these compounds, α-olefins having 2 to 8 carbon atoms are preferred and may be used either alone or in combination.

In the powder method there are used polymer particles containing recurring units derived from the above α-olefins in a proportion of usually at least 50 mol%, preferably at least 80 mol%, more preferably at least 90 mol%, still more preferably 100 mol%.

Other compounds such as linear polyene compounds and cyclic polyene compounds in addition to the above α-olefins may be used in the powder method. The polyene compounds which can be used in the powder methods are polyenes having at least two conjugated or non-conjugated olefinic double bonds per molecule. Examples of such linear polyene compounds include 1,4-hexadiene, 1,5-hexadiene, 1,7-octadiene, 1,9-decadiene, 2,4,6-octatriene, 1,3,7-octatriene, 1,5,9-decatriene and divinylbenzene. Examples of cyclic polyene compounds include 1,3-cyclopentadiene, 1,3-cyclohexadiene, 5-ethyl-1,3-cyclohexadiene, 1,3-cycloheptadiene, dicyclopentadiene, dicyclohexadiene, 5-ethylidene-2-norbornene, 5-methylene-2-norbornene, 5-vinyl-2-norbornene, 5-isopropylidene-2-norbornene, methylhydroindene, 2,3-diisopropylidene-5-norbornene, 2-ethylidene-3-isopropylidene-5-norbornene and 2-propenyl-2,5-norbornadiene.

In the powder method, there can be used polyene compounds obtained by condensing a cyclopentadiene compound such as cyclopentadiene with an α-olefin such as ethylene, propylene or butene-1 by utilizing Diels-Alder reaction.

Further, cyclic monoene compounds can be used in the powder method. Examples of the cyclic monoene compounds include monocycloalkenes such as cyclopropene, cyclobutene, cyclopentene, cyclohexene, 3-methylcyclohexene, cycloheptene, cyclooctene, cyclodecene, cyclododecene, tetracyclodecene, octacyclodecene and cycloeicosene; bicycloalkenes such as norbornene, 5-methyl-2-norbornene, 5-ethyl-2-norbornene, 5-isobutyl-2-norbornene, 5,6-dimethyl-2-norbornene, 5,5,6-trimethyl-2-norbornene and 2-norbornene; tricycloalkenes such as 2,3,3a,7a-tetrahydro-4,7-methano-1H-indene and 3a,5,6,7a-tetrahydro-4,7-methano-1H-indene; and tetracyclalkenes such as 1,4,5,8-dimethano-1,2,3,4,4a,5,8,8a-octahydronaphthalene, 2-methyl-1,4,5,8-dimethano-1,2,3,4,4a,5,8,8a-octahydronaphthalene, 2-ethyl-1,4,5,8-dimethano-1,2,3,4,4a,5,8,8a-octahydronaphthalene, 2-propyl-1,4,5,8-dimethano-1,2,3,4,4a,5,8,8a-octahydronaphthalene, 2-hexyl-1,4,5,8-dimethano-1,2,3,4,4a,5,8,8a-octahydronaphthalene, 2-stearyl-1,4,5,8-dimethano-1,2,3,4,4a,5,8,8a-octahydronaphthalene, 2,3-dimethyl-1,4,5,8-dimethano-1,2,3,4,4a,5,8,8a-octahydronaphthalene, 2-methyl-3-ethyl-1,4,5,8-dimethano-1,2,3,4,4a,5,8,8a-octahydronaphthalene, 2-chloro-1,4,5,8-dimethano-1,2,3,4,4a,5,8,8a-octahydronaphthalene, 2-bromo-1,4,5,8-dimethano-1,2,3,4,4a,5,8,8a-octahydronaphthalene, 2-fluoro-1,4,5,8-dimethano-1,2,3,4,4a,5,8,8a-octahydronaphthalene, 2,3-dichloro-1,4,5,8-dimethano-1,2,3,4,4a,5,8,8a-octahydronaphthalene; and polycycloalkenes such as hexacyclo[6.6.1.$1^{3,6}$.$1^{10,13}$.$0^{2,7}$.$0^{9,14}$]heptadecene-4, pentacyclo[8.8.$1^{2,9}$.$1^{4,7}$.$1^{11,18}$. 0.$0^{3,8}$.$0^{12,17}$]heneicosene-5 and octacyclo[8.8.$1^{2,9}$.$1^{4,7}$.$1^{11,18}$.$1^{13,16}$.0.$0^{3,8}$.$0^{12,17}$] docosene-5.

Further, styrene and substituted styrene compounds can be used in the powder method.

The polyolefin particles used in the powder method can be obtained by polymerizing or copolymerizing the α-olefins described above in the presence of a catalyst. The polymerization reaction or the copolymerization reaction may be carried out in a vapor phase (vapor phase process) or in a liquid phase (liquid phase process).

Preferably, the polymerization reaction or the copolymerization reaction is carried out in a suspension state so that the polyolefin particles can be obtained as solids.

In the preparation of the polyolefin particles by the powder method, there is used a method wherein two or more monomers are fed to a polymerizer to form simultaneously crystalline olefin polymer part and non-crystalline olefin polymer part or a method wherein at least two polymerizers are used and the synthesis of crystalline olefin polymer part and the synthesis of non-crystalline olefin polymer part are carried out separately and in series. The latter method is preferable, because the molecular weight, composition and amount of the non-crystalline polymer part can be freely controlled.

Particularly preferred are a method wherein the crystalline olefin polymer part is synthesized by vapor phase polymerization and then the non-crystalline olefin polymer part is synthesized by vapor phase polymerization and a method wherein the crystalline olefin polymer part is synthesized by using a monomer as a solvent and then the non-crystalline olefin part is synthesized by vapor phase polymerization.

Inert hydrocarbons can be used as the solvents in the polymerization reaction or the copolymerization reaction. Further, α-olefins which are starting materials may be used as the reaction solvents. The above-described polymerization or copolymerization may be carried out by combining the liquid phase process with the vapor phase process. In the powder method, it is preferred that the polymerization or copolymerization reaction is carried out by the vapor phase process or after the reaction is carried out by using the α-olefin as the solvent, further the reaction is carried out in combination with the vapor phase process.

Catalysts used for the polymerization reaction or the copolymerization reaction in the powder method are usually those composed of a catalyst component [A] containing transition metal selected from Groups IV A, V A, VI A, VII A and VIII metals of the Periodic Table and an organometallic compound catalyst component [B] selected from Groups I, II and III metals of the Periodic Table.

As the above-described catalyst component [A], there are preferred catalysts containing transition metal selected from Groups IV A and VA of the Periodic Table. Among them, there is preferred a catalytic component containing at least one element selected from the group consisting of titanium, zirconium, hafnium and vanadium.

Other preferred examples of the catalyst component [A] are those containing halogen atom and magnesium atom in addition to the transition metal and those containing a compound wherein Groups IV A and VA transition metals of the Periodic Table are coordinated with a group having conjugated π-electron.

In the powder method, there is preferably used a catalyst component [A], which is prepared so that the catalyst component [A] in the form of a solid state or in the form of solid supported on a carrier is present in the reaction system in the polymerization reaction or the copolymerization reaction.

The above-described catalyst component [A] is illustrated in more detail below by referring to a solid catalyst component [A] comprising transition metal, halogen atom and magnesium atom.

The average particle diameter of the solid catalyst component [A] as mentioned above is in the range of preferably 1 to 200 µm, more preferably 5 to 100 µm, particularly preferably 10 to 80 µm. Geometrical standard deviation ($\delta g$) as a measure of the particle size distribution of the solid catalyst component [A] is in the range of preferably 1.0 to 3.0, more preferably 1.0 to 2.1, particularly preferably 1.0 to 1.7.

The average particle diameter and particle size distribution of the catalyst component [A] can be measured by light transmission method. Concretely, the catalyst composition [A] is introduced into a decalin-insoluble solvent in such an amount as to give a concentration (content) of about 0.1 to 0.5% by weight, preferably 0.1% by weight, thus preparing a dispersion. The dispersion is placed in a cell for measurement. Light is applied to the cell, and there is continuously measured the intensity of light which is transmitted, through the liquid wherein particles are in a certain precipitation state to thereby measure particle size distribution. Standard deviation($\delta g$) is determined from logarithmic normal distribution function on the basis of the particle size distribution. More concretely, standard deviation ($\delta g$) is determined as a ratio ($\theta_{50}/\theta_{16}$) of average particle diameter ($\theta_{50}$) to particle diameter ($\theta_{16}$) of 16 wt% particles ordering from a smaller particle size. The average particle diameter of the catalyst is represented in terms of weight average particle diameter.

Further, the catalyst component [A] is in the form of true sphere, oval or granule. Particles have an aspect ratio of preferably not higher than 3, more preferably not higher than 2, particularly preferably not higher than 1.5.

When the catalyst component [A] contains magnesium atom, titanium atom, halogen atom and an electron donor, it is preferred that the atomic ratio of magnesium/titanium is greater than 1. The ratio is in the range of usually 2 to 50, preferably 6 to 30, the atomic ratio of halogen/titanium is in the range of usually 4 to 100, preferably 6 to 40, and the molar ratio of electron donor/titanium is in the range of usually 0.1 to 10, preferably 0.2 to 6. The catalyst component [A] has a specific surface area of usually at least 3 $m^2/g$, preferably at least 40 $m^2/g$, more preferably 100 to 800 $m^2/g$.

The catalyst component [A] does not cause the elimination of the titanium compound in the catalyst composition by a simple operation such as washing with hexane at room temperature.

The catalyst component [A] used in the powder method may contain other atoms and metals in addition to the above-described ingredients. Further, a functional group may be introduced into the catalyst component [A]. Furthermore, the catalyst component [A] may be diluted with an organic or inorganic diluent.

The catalyst component [A] as mentioned above can be prepared, for example, by a method wherein a catalyst composition is prepared after a magnesium compound having an average particle diameter and particle size distribution within the range described above and the above-described shape is formed, or a method wherein a solid catalyst component having the above-described particle diameter is formed by bringing a liquid magnesium compound and a liquid titanium compound into contact with each other.

The catalyst component [A] as mentioned above can be used as such, or can be used after supporting the magnesium compound, the titanium compound and optionally the electron donor on a uniform carrier. If desired, a finely divided catalyst is previously prepared and then granulated into a desired shape described above.

The catalyst component [A] is described in the specifications of Japanese Patent Laid-Open Publn. No. 135102/1980, 135103/1980, 811,1981 and 67311/1981 and Japanese Patent Application Nos. 181019/1981 and 21109/1986.

Examples of method for preparing the catalyst component [A] described in the specification of the above-described publications and applications include the following methods.

(1) Method wherein a solid magnesium compound-electron donor complex having an average particle diameter of 1 to 200 μm and a particle size distribution of not higher than 3.0 in terms of geometric standard deviation (δg) is pretreated with reaction aids such as an electron donor and/or an organoaluminum compound or halogen-containing silicon compound (or not pretreated) and is reacted with a liquid titanium halide compound such as titanium tetrachloride under reaction conditions.

(2) Method wherein a liquid magnesium compound incapable of reduction is reacted with a liquid titanium compound preferably in the presence of an electron donor to precipitate a solid component having an average particle diameter of 1 to 200 μm and geometric standard deviation (δg) in particle size distribution of not more than 3.0. If desired, the solid is further reacted with a liquid titanium compound, preferably titanium tetrachloride or a liquid titanium compound and an electron donor.

(3) Method wherein a liquid magnesium compound capable of reduction is previously brought into contact with a reaction aid such as a polysiloxane or a halogen-containing silicon compound which is capable of losing the reduction power of the magnesium compound to precipitate a solid component having an average particle diameter of 1 to 200 μm and geometric standard deviation (δg) in particle size distribution of not more than 3.0 and the solid component is then reacted with a liquid titanium compound, preferably titanium tetrachloride or a titanium compound and an electron donor.

(4) Method wherein a magnesium compound capable of reduction is brought into contact with an inorganic carrier such as silica or an organic carrier, the resulting carrier is brought into contact with a halogen-containing compound (or not brought into contact with a halogen-containing compound) and then brought into contact with a liquid titanium compound, preferably titanium tetrachloride or a titanium compound and an electron donor to thereby react the magnesium compound supported on the carrier with the titanium compound, etc.

The thus-prepared solid catalyst components [A] have a performance capable of preparing polymers having high stereoregularity at high catalyst efficiency. For example, when propylene is homopolymerized under the same conditions, the catalyst components [A] have a performance capable of preparing polypropylene having an isotactic index (boiling n-heptane-insoluble) of at least 92%, particularly at least 96% in an amount of at least 3,000 g, preferably at least 5,000 g, particularly preferably 10,000 g per one millimole of titanium.

The magnesium compound, the halogen-containing silicon compound, the titanium compound and the electron donor which can be used in the preparation of the catalyst component [A] as described above are illustrated below. Aluminum component which is used in the preparation of the catalyst component [A] is compounds exemplified in the organometallic compound catalyst component [B] described hereinafter.

Examples of the magnesium compound include inorganic magnesium compounds such as magnesium oxide, magnesium hydroxide and hydrotalcite; and organomagnesium compounds such as magnesium salt of carboxylic acids, alkoxymagnesium, aryloxymagnesium, alkoxymagnesium halide, aryloxymagnesium halide, magnesium dihalides, dialkylmagnesium and diarylmagnesium.

Examples of the titanium compound include titanium halides such as titanium tetrachloride, alkoxytitanium halides, aryloxytitanium halides, alkoxytitanium and aryloxytitanium. Of these compounds, titanium tetrahalides are preferred with titanium tetrachloride being particularly preferred.

Examples of the electron donor include oxygen-containing electron donors such as alcohols, phenols, ketones, aldehydes, carboxylic acids, esters of organic and inorganic acids, ethers, acid amides, acid anhydrides and alkoxysilanes and nitrogen-containing electron donors such as ammonia, amines, nitriles and isocyanates.

Concrete examples of compounds which can be used as the electron donors include

alcohols having 1 to 18 carbon atoms such as methanol, ethanol, propanol, pentanol, hexanol, octanol, dodecanol, octadecyl alcohol, oleyl alcohol, benzyl alcohol, phenylethyl alcohol, isopropyl alcohol, cumyl alcohol and isopropylbenzyl alcohol;

phenolic compounds having 6 to 20 carbon atoms, which may have a lower alkyl group, such as phenol, cresol, xylenol, ethylphenol, propylphenol, nonylphenol, cumylphenol and naphthol;

ketones having 3 to 15 carbon atoms, such as acetone, methyl ethyl ketone, methyl isobutyl ketone, acetophenone, benzophenone and benzoquinone;

aldehydes having 2 to 15 carbon atoms, such as acetaldehyde, propionaldehyde, octylaldehyde, benzaldehyde, tolylaldehyde and naphthoaldehyde;

esters of organic acids having 2 to 30 carbon atoms, such as methyl formate, methyl acetate, ethyl acetate, vinyl acetate, propyl acetate, octyl acetate, cyclohexyl acetate, ethyl propionate, methyl butyrate, ethyl valerate, methyl chloroacetate, ethyl dichloroacetate, methyl methacrylate, ethyl dichloroacetate, methyl acrylate, ethyl crotonate, ethyl cyclohexanecarboxylate, methyl benzoate, ethyl benzoate, propyl benzoate, butyl benzoate, octyl benzoate, cyclohexyl benzoate, phenyl benzoate, benzyl benzoate, methyl toluylate, ethyl toluylate, amyl toluylate, ethyl ethylbenzoate, methyl anisate, n-butyl maleate, diisobutyl methylmalonate, di-n-hexyl cyclohexenecarboxylate, diethyl nadate, diisopropyl tetrahydrophthalate, diethyl phthalate, diisobutyl phthalate, di-n-butyl phthalate, di-2-ethylhexyl phthalate, $\gamma$-butyrolactone, $\delta$-valerolactone, coumarin, phthalide and ethylene carbonate;

acid halides having 2 to 15 carbon atoms, such as acetyl chloride, benzoyl chloride, toluic acid chloride and anisic acid chloride;

ethers having 2 to 20 carbon atoms such as, methyl ether, ethyl ether, isopropyl ether, butyl ether, amyl ether, tetrahydrofuran, asisole and diphenyl ether;

acid amides such as acetamide, benzamide and toluic acid amide;

amines such as methylamine, ethylamine, diethylamine, tributylamine, piperidine, tribenzylamine, aniline, pyridine, picoline and tetramethylenediamine;

nitriles such as acetonitrile, benzonitrile and tolunitrile;

organophosphorus compounds having P-O-P bond, such as trimethyl phosphite and triethyl phosphite; and

alkoxysilanes such as ethyl silicate and diphenyldimethoxysilane.

These electron donors may be used either alone or in combination.

Of these electron donors, there are preferable compounds having no active hydrogen, such as esters of organic and inorganic acids, alkoxy(aryloxy)silane compounds, ethers, ketones, tertiary amines, acid halides and acid anhydrides. And there are more preferable compounds such as esters and alkoxy(aryloxy)silane. Among them, there are particularly preferred esters of aromatic monocarboxylic acids with alcohols having 1 to 8 carbon atoms and esters of dicarboxylic acids such as malonic acid, substituted malonic acids, substituted succinic acids, maleic acid, substituted maleic acids, 1,2- cyclohexanedicarboxylic acid and phthalic acid with alcohols having two or more carbon atoms.

These electron donors may be directly added as a starting material when the catalysts are prepared. Alternatively, compounds which can be converted into electron donors may be blended and converted into electron donors during the course of preparation of the catalysts without adding the above electron donors as a starting material to the reaction system in the preparation of the catalyst component [A].

The thus-obtained catalyst component [A] can be purified by thoroughly washing it with liquid inert hydrocarbons after the preparation thereof. Examples of the hydrocarbons which can be used for the washing of the catalyst component [A] include aliphatic hydrocarbon compounds such as n-pentane, isopentane, n-hexane, isohexane, n-heptane, n-octane, isoctane, n-decane, n-dodecane, kerosine and liquid paraffin; alicyclic hydrocarbon compounds such as cyclopentane, methylcyclopentane, cyclohexane and methylcyclohexane; aromatic hydrocarbon compounds such as benzene, toluene, xylene and cymene; and

halogenated hydrocarbon compounds such as chlorobenzene and dichloroethane. These compounds may be used either alone or in combination.

Preferably, organoaluminum compounds having at least one $A\ell$-C bond per molecule are used as the organometallic compound catalyst component [B] used in the powder method.

Examples of such organoaluminum compounds include organoaluminum compounds represented by the following formula (i)

$R^1_mA\ell(OR^2)_nH_pX_q$ (i)

wherein $R^1$ and $R^2$ may be the same or different and represent independently a hydrocarbon group having normally 1 to 15 carbon atoms, preferably 1 to 4 carbon atoms; X is halogen; and m, n, p and q are numbers satisfying $0 \leqq m \leqq 3$, $0 \leqq n < 3$, $0 \leqq p < 3$, $0 \leqq q < 3$ and $m + n + p + q = 3$; and

complex alkyl compounds of aluminum with Group I metals of the Periodic Table, represented by the following formula (ii)

$M^1A\ell R^1_4$ (ii)

wherein $M^1$ is Li, Na or K and $R^1$ is as defined above.

Examples of the organoaluminum compounds having the formula (i) include:

compounds having the formula of $R^1_mA\ell(OR^2)_{3-m}$ wherein $R^1$ and $R^2$ are as defined above, and m is a number preferably satisfying $1.5 \leqq m < 3$;

compounds having the formula of $R^1_mA\ell X_{3-m}$ wherein $R^1$ and X are as defined above, and m is a number preferably satisfying $0 \leqq m < 3$;

compounds having the formula of $R^1_mA\ell H_{3-m}$ wherein $R^1$ is as defined above, and m is a number preferably satisfying $2 \leqq m < 3$; and

compounds having the formula of $R^1_mA\ell(OR^2)_n X_q$ wherein $R^1$, $R^2$ and X are as defined above, and m, n and q are numbers satisfying $0 < m \leqq 3$, $0 \leqq n < 3$, $0 \leqq q < 3$ and $m + n + q = 3$.

Concrete examples of the organoaluminum compounds having the formula (i) include

trialkylaluminum compounds such as triethylaluminum, tributylaluminum and triisopropylaluminum;

trialkenylaluminum compounds such as triisoprenylaluminum;

dialkylaluminum alkoxides such as diethylaluminum ethoxide and dibutylaluminum butoxide;

alkylaluminum sesquialkoxides such as ethylaluminum sesquiethoxide and butylaluminum sesquibutoxide;

partially alkoxylated alkylaluminum compounds such as those having an average composition represented by, for example, the formula of $R^1_{2.5}A\ell(OR^2)_{0.5}$;

dialkylaluminum halides such as diethylaluminum chloride, dibutylaluminum chloride and diethylaluminum bromide;

alkylaluminum sesquihalides such as ethylaluminum sesquichloride, butylaluminum sesquichloride and ethylaluminum sesquibromide;

partially halogenated alkylaluminum compounds such as alkylaluminum dihalides, for example, ethylaluminum dichloride, propylaluminum dichloride and butylaluminum dibromide;

dialkylaluminum hydrides such as diethylaluminum hydride and dibutylaluminum hydride;

partially hydrogenated alkylaluminum compounds of alkylaluminum dihydrides, such as ethylaluminum dihydride and propylaluminum dihydride; and

partially alkoxylated and halogenated alkylaluminum compounds such as ethylaluminum ethoxychloride, butylaluminum butoxychloride and ethylaluminum ethoxybromide.

Furthermore, the organoaluminum compounds may be such compounds being similar to those having the above-mentioned formula (i) as organoaluminum compounds in which two or more aluminum atoms are bonded together via, for example, an oxygen atom or a nitrogen atom. Concrete examples of such compounds are as follows:

$(C_2H_5)_2A\ell OA\ell(C_2H_5)_2$,

$(C_4H_9)_2A\ell OA\ell(C_4H_9)_2$,

and

$(C_2H_5)_2A\ell NA\ell(C_2H_5)_2$
|
$C_6H_5$

Examples of the organoaluminum compounds having the formula (ii) include

$LiA\ell(C_2H_5)_4$,

and

LiAℓ$(C_7H_{15})_4$.

Among the above-exemplified compounds, particularly preferred are trialkylaluminum compounds, mixture of trialkylaluminum compounds and alkylaluminum halides and mixtures of trialkylaluminum compounds and aluminum halides.

It is preferred that the catalyst component [A] and the organometallic compound catalyst component [B] are used in combination with the electron donor [C].

Examples of the electron donor [C] which can be used in the present invention include amines, amides, ethers, ketones, nitriles, phosphines, stibines, arsines, phosphoamides, esters, thioethers, thioesters, acid anhydrides, acid halides, aldehydes, alcoholates, alkoxy(aryloxy)silanes, organic acids and amides of Groups I, II, III and IV metals of the Periodic Table and acceptable salts thereof. The salts can be formed in the reaction system by the reaction of organic acids with organometallic compounds used as the catalyst component [B].

Concrete examples of the electron donors are compounds already described above in the examples of the catalyst component [A]. Among these electron donors, particularly preferred are esters of organic acids, alkoxy(aryloxy)silane compounds, ethers, ketones, acid anhydrides and amides. Particularly, when electron donors in the catalyst component [A] are esters of monocarboxylic acids, alkyl esters of aromatic carboxylic acids are preferred as electron donors.

When electron donors in the catalyst component [A] are esters of dicarboxylic acids with alcohols having two or more carbon atoms, it is preferred to use alkoxy(aryloxy)silane compounds represented by the following formula

$R_nSi(OR^1)_{4-n}$

wherein R and $R^1$ represent each a hydrocarbon group and n is a number satisfying $0 \leqq n < 4$; and high sterical hindered amines as electron donor [C].

Concrete examples of the alkoxy(aryloxy)silane compounds include trimethylmethoxysilane, trimethoxyethoxysilane, dimethyldimethoxysilane, dimethylethoxysilane, diisopropyldimethoxysilane, t-butylmethyldimethxysilane, t-butylmethyldiethoxysilane, t-amylmethyldiethoxysilane, diphenyldimethoxysilane, phenylmethyldimethoxysilane, diphenyldiethoxysilane, bis-o-tolyldimethoxysilane, bis-m-tolyldimethoxysilane, bis-p- tolylmethoxysilane, bis-p-tolyldiethoxysilane, bisethylphenyldimethoxysilane dicyclohexyldimethoxysilane, cyclohexylmethylmethoxysilane, cyclohexylmethyldiethoxysilane, ethyltrimethoxysilane, ethyltriethoxysilane, vinyltrimethoxysilane, n-propyltriethoxysilane, decylmethoxysilane, decyltriethoxysilane, ppenyltrimethoxysilane, γ-chloropropyltrimethoxysilane, methyltriethoxysilane, vinyltriethoxysilane, t-butyltriethoxysilane, n-butyltriethoxysilane, isobutyltriethoxysilane, phenyltriethoxysilane, γ-aminopropyltriethoxysilane, chlorotriethoxysilane, ethyltriisopropoxysilane, vinyltributoxysilane, cyclohexyltrimethoxysilane, cyclohexyltriethoxysilane, 2-norbornanetrimethoxysilane, 2-norbornanetriethoxysilane, 2-norbornanedimethyldimethoxysilane, ethyl silicate, butyl silicate, trimethylphenoxysilane, methyltriallyloxysilane, vinyltris(β-methoxysilane) and dimethyltetraethoxydisloxane. Among them, there are preferred ethyltriethoxysilane, n-propyltriethoxysilane, t-butyltriethoxysilane, vinyltriethoxysilane, phenyltriethoxysilane, vinyltributoxysilane, diphenyldimethoxysilane, phenylmethyldimethoxysilane, bis-p-tolylmethoxysilane, p-tolylmethyldimethoxysilane, dicyclohexyldimethoxysilane, dichlorohexylmethyldimethoxysilane, 2-norbornanetriethoxysilane, 2-norbornanemethyldimethoxysilane, diphenyldiethoxysilane and ethyl silicate.

Preferred examples of the high sterical hindered amines include 2,2,5,6-tetramethylpiperidine, 2,2,5,5-tetramethylpyrrolidine, their derivatives and tetramethylmethylenediamine. Among these compounds, alkoxy(aryloxy)silane compounds are preferred as electron donors used in catalytic component.

In the powder method, there can be preferably used catalysts composed of the catalyst component [A] containing a transition metal compound of Groups IV A and V A metals of the periodic Table, said compound having a group having conjugated π-electron as ligand, and the organometallic compound catalyst component [B].

Examples of transition metals of Groups IV A and V A of the Periodic Table include zirconium, titanium, hafnium, chromium and vanadium.

Examples of the group (ligand) having conjugated π-electron include cyclopentadienyl group, alkyl-substituted cyclopentadienyl groups such as methylcyclopentadienyl group, ethylcyclopentadienyl group, t-butylcyclopentadienyl group, dimethylcyclopentadienyl group and pentamethylcyclopentadienyl group, indenyl group and fluorenyl group.

There are preferred groups where at least two ligands having the cycloalkadienyl skeleton as mentioned above are bonded to each other through a lower alkyl group or a group containing silicon, phosphorus, oxygen or nitrogen.

Examples of such groups include ethylenebisindenyl group and isopropyl(cyclopentadienyl-1-fluorenyl)

group.

At least one, preferably two ligands having the cycloalkadienyl skeleton are coordinated with transition metal.

Examples of ligands other than the ligands having the cycloalkadienyl skeleton include hydrocarbon group having 1 to 12 carbon atoms, alkoxy group, aryloxy group, halogen and hydrogen.

Examples of the hydrocarbon group having 1 to 12 carbon atoms include alkyl group, cycloalkyl group, aryl group and aralkyl group. Concrete examples of the alkyl group include methyl, ethyl, propyl, isopropyl and butyl.

Examples of the cycloalkyl group include cyclopentyl and cyclohexyl.

Examples of the aryl group include phenyl and tolyl.

Examples of the aralkyl group include benzyl and neophyl.

Examples of the alkoxy group include methoxy, ethoxy and butoxy.

An example of the aryloxy group include phenoxy.

Examples of halogen include fluorine, chlorine, bromine and iodine.

For example, when the transition metal has a valence of 4, the transition metal compound containing ligand having the cycloalkadienyl skeleton used in the powder method can be more concretely represented by the following formula.

$R^2_kR^3_\ell R^4_mR^5_nM$

wherein M is zirconium, titanium, hafnium or vanadium; $R^2$ is a group having a cycloalkadienyl skeleton; $R^3$, $R^4$ and $R^5$ are each a group having a cycloalkadienyl skeleton, an alkyl group, a cycloalkyl group, an aryl group, an aralkyl group, an alkoxy group, an aryloxy group, halogen or hydrogen; k is an integer of 1 or greater and $k + \ell + m + n = 4$.

There are particularly preferred compounds where $R^2$ and $R^3$ are each a group having a cycloalkadienyl skeleton and the two groups having a cycloalkadiney skeleton are bonded to each other through a lower alkyl group or a group containing silicon, phosphorus, oxygen or nitrogen.

The transition metal compounds having ligands having a cycloalkadienyl skeleton where M is zirconium include concretely:

bis(cyclopentadienyl)zirconium monochloride monohydride,
bis(cyclopentadienyl)zirconium monobromide monohydride,
bis(cyclopentadienyl)methylzirconium hydride,
bis(cyclopentadienyl)ethylzirconium hydride,
bis(cyclopentadienyl)phenylzirconium hydride,
bis(cyclopentadienyl)benzylzirconium hydride,
bis(cyclopentadienyl)neopentylzirconium hydride,
bis(methylcyclopentadienyl)zirconium monochloride hydride,
bis(indenyl)zirconium monochloride monohydride,
bis(cyclopentadienyl)zirconium dichloride,
bis(cyclopentadienyl)zirconium dibromide,
bis(cyclopentadienyl)methylzirconium monochloride,
bis(cyclopentadienyl)ethylzirconium monochloride, bis(cyclopentadienyl)cyclohexylzirconium monochloride,
bis(cyclopentadienyl)phenylzirconium monochloride,
bis(cyclopentadienyl)benzylzirconium monochloride,
bis(methylcyclopentadienyl)zirconium dichloride,
bis(t-butylcyclopentadienyl)zirconium dichloride,
bis(indenyl)zirconium dichloride,
bis(indenyl)zirconium dibromide,
bis(cyclopentadienyl)zirconiumdimethyl,
bis(cyclopentadienyl)zirconiumdiphenyl,
bis(cyclopentadienyl)zirconiumdibenzyl,
bis(cyclopentadienyl)zirconium methoxychloride,
bis(cyclopentadienyl)zirconium ethoxychloride,
bis(methylcyclopentadienyl)zirconium ethoxychloride
bis(cyclopentadienyl)zirconiumphenoxy chloride,
bis(fluorenyl)zirconium dichloride,
ethylenebis(indenyl)diethylzirconium,
ethylenebis(indenyl)diphenylzirconium,
ethylenebis(indenyl)methylzirconium,
ethylenebis(indenyl)ethylzirconium monochloride,

ethylenebis(indenyl)zirconium dichloride,
isopropylbis(indenyl)zirconium dichloride,
isopropyl(cyclopentadienyl)-1-fluorenylzirconium chloride,
ethylenebis(indenyl)zirconium dibromide,
ethylenebis(indenyl)zirconium-methoxy monochloride,
ethylenebis(indenyl)zirconiumethoxy monochloride,
ethylenebis(indenyl)zirconiumphenoxy monochloride,
ethylenebis(cyclopentadienyl)zirconium dichloride,
propylenebis(cyclopentadienyl)zirconium dichloride,
ethylenebis(t-butylcyclopentadienyl)zirconium dichloride,
ethylenebis(4,5,6,7-tetrahydro-1-indenyl)dimethylzirconium,
ethylenebis(4,5,6,7-tetrahydro-1-indenyl)methylzirconium monochloride,
ethylenebis(4,5,6,7-tetrahydro-1-indenyl)zirconium dichloride,
ethylenebis(4,5,6,7-tetrahydro-1-indenyl)zirconium dibromide,
ethylenebis(4-methyl-1-indenyl)zirconium dichloride,
ethylenebis(5-methyl-1-indenyl)zirconium dichloride,
ethylenebis(6-methyl-1-indenyl)zirconium dichloride,
ethylenebis(7-methyl-1-indenyl)zirconium dichloride,
ethylenebis(5-methoxy-1-indenyl)zirconium dibromide,
ethylenebis(2,3-dimethyl-1-indenyl)zirconium dichloride,
ethylenebis(4,7-dimethyl-1-indenyl)zirconium dichloride, and
ethylenebis(4,7-dimethoxy-1-indenyl)zirconium dichloride.

Transition metal compounds where zirconium metal in the above-described zirconium compounds is replaced with titanium metal, hafnium metal, chromium metal or vanadium metal can be used.

It is preferred to use an organoaluminum compound obtained by the reaction of an organoaluminum compound with water or the reaction of a solution of aluminoxane (for example dissolved in a hydrocarbon solvent) with water or an active hydrogen-containing compound as the organometallic compound catalyst component [B] in this case.

The organoaluminum compound as mentioned above is insoluble or difficulty soluble in benzene at 60 °C.

The amounts of the catalysts to be used in the powder method vary depending on the types of the catalysts. For example, when the catalyst composed of the catalyst component [A], the organometallic compound catalyst component [B] and the electron donor [C] described above is used, the amount of the catalyst component [A] is in the range of usually 0.001 to 0.5 millimol, preferably 0.005 to 0.5 millimol (in terms of the transition metal) per 1 liter of polymerization volume. The amount of the organometallic compound catalyst component [B] is in the range of usually 1 to 10,000 mol, preferably 5 to 500 mol per mol of the transition metal atom of the catalyst component [A] in the polymerization system. Further, when the electron donor [C] is used, the amount of the electron donor [C] is in the range of usually not more than 100 mol, preferably 1 to 50 mol, particularly preferably 3 to 20 mol per mol of the transition metal atom of the catalyst component [A] in the polymerization system.

It is preferzed that preliminary polymerization is carried out prior to the final polymerization when the above-described catalysts are used in the powder method. A combination of at least the catalyst component [A] and the organometallic compound catalyst component [B] is used as the catalyst in the preliminary polymerization.

When titanium is used as the transition metal, the amount to be polymerized in the preliminary polymerization is in the range of usually 1 to 2,000 g, preferably 3 to 1,000 g, particularly preferably 10 to 500 g per one gram of the titanium catalyst component.

It is preferred that the preliminary polymerization is carried out in the presence of an inert hydrocarbon solvent. Examples of the inert hydrocarbon solvent which can be used include aliphatic hydrocarbons such as propane, butane, n-pentane, i-pentane, n-hexane, i-hexane, n-heptane, n-octane, i-octane, n-decane, n-dodecane and kerosine; alicyclic hydrocarbons such as cyclopentane, methylcyclopentane, cyclohexane and methylcyclohexane; aromatic hydrocarbons such as benzene, toluene and xylene; and halogenated hydrocarbon compounds such as methylene chloride, ethyl chloride, ethylene chloride and chlorobenzene. Among these inert hydrocarbon solvents, the aliphatic hydrocarbons are preferred with aliphatic hydrocarbons having 4 to 10 carbon atoms being particularly preferred. Further, monomers used in the reaction can be used as solvents.

α-olefins which are used in the preliminary polymerization are preferably those having not more than 10 carbon atoms, such as ethylene, propylene, 1-butene, 1-pentene, 4-methyl-1-pentene, 3-methyl-1-pentene,

1-heptene, 1-octene and 1-decene. Of these compounds, α-olefins having 3 to 6 carbon atoms are preferred with propylene being particularly preferred. These α-olefins can be used alone. If desired, these α-olefins may be used in a combination of two or more of them, so long as crystalline polymers are produced.

Polymerization temperature in the preliminary polymerization varies depending on the types of α-olefins and inert solvents to be used and can not be specified, but is in the range of generally from -40 to 80° C, preferably from -20 to 40° C, particularly preferably from -10 to 30° C. For example, when propylene is used as α-olefin, the polymerization temperature is in the range of from -40 70° C. When butene is used, the temperature is from -40 to 40° C, and when 4-methyl-1-pentene and/or 3-methyl-1-pentene are/is used, the temperature is from -40 to 70° C. Hydrogen gas can be allowed to coexist in the reaction system of the preliminary polymerization.

After the preliminary polymerization is carried out in the manner described above, or without carrying out the preliminary polymerization, the above-described monomers are introduced into the reaction system to carry out a polymerization reaction (final polymerisation), thus preparing polyolefin particles.

The monomers used in the final polymerization may be the same as or different from those used in the preliminary polymerization.

The polymerization temperature of the olefins in the final polymerization is in the range of from -50 to 200° C, preferably from 0 to 150° C. Polymerization pressure is generally atmospheric pressure to 100 $kg/cm^2$, preferably atmospheric pressure to 50 $kg/cm^2$. Polymerization reaction can be carried out by any of batch, semi-continuous and continuous methods.

The molecular weights of the resulting olefin polymers can be controlled by hydrogen and/or polymerization temperature.

In the powder method, the thus-obtained polyolefin particles as such are usually used in the modifying reaction without subjecting to crushing or granulating stage.

In the powder method, polyolefins which constitute the above-described polyolefin particles are modified with modifiers such as ethylenically unsaturated group-containing carboxylic acids, acid anhydrides thereof or derivatives thereof (sometimes referred to as ethylenically unsaturated group-containing carboxylic acids, etc.).

In the powder method, the polyolefin particles are brought into contact with the modifiers such as ethylenically unsaturated group-containing carboxylic acids, etc. in the presence of specific solvents and radical initiators while keeping the shape of the polyolefin particles, thus modifying the polyolefin particles.

Examples of the ethylenically unsaturated group-containing carboxylic acids, etc. which can be used in the powder method include compounds already described above.

Radical initiators are used in the powder method. Usually, organic peroxides and azo compounds are used as the radical initiators in the powder method.

Examples of the organic peroxides which can be used as the radical initiators in the powder method include dicumyl peroxide, di-tert-butyl peroxide, 2,5-dimethyl-2,5-bis(tert-butylperoxy)hexane, 2,5-dimethyl-2,5-bis(tert-butylperoxy)hexine-3, 1,3-bis(tert-butylperoxyisopropyl)benzene, 1,1-bis(tert-butylperoxy)-3,3,5-trimethylcyclohexane, n-butyl-4,4-bis(tert-butylperoxy) valerate, dibenzoyl peroxide, tert-butyl peroxybenzoate, acetyl peroxide, isobutyryl peroxide, octanoyl peroxide, decanoyl peroxide, lauroyl peroxide, 3,5,5-trimethylhexanoyl peroxide, 2,4-dichlorobenzoyl peroxide and m-toluoyl peroxide. An example of azo compound is azobisisobutyronitrile. These radical initiators may be used either alone or in a combination. Of these radical initiators, dibenzoyl peroxide is particularly preferred.

In the powder method, the above-described polyolefin particles are brought into contact with the ethylenically unsaturated group-containing carboxylic acids, etc. in the presence of the radical initiator and a specific solvent to prepare modified olefin polymer particles.

In the powder method, there are used solvents having solubility of not more than 5 wt%, preferably not more than 0.4 wt% in water at 20° C. When the modified olefin polymer particles are prepared in the presence of the solvent as mentioned above, modified olefin polymer particles having excellent powder characteristics can be obtained, though the reasons for the unexpected results so far are not known. Further, where the solvent is brought into contact with the polyolefin particles, the solvent plays a role in swelling the polyolefin particles and facilitating the penetration of the modifier and the radical initiator into the depth of the polyolefin particles, whereby the polyolefin particles can be uniformly modified throughout the whole of the particles.

Examples of the solvent having solubility of not more than 0.5 wt% in water at 20° C, which can be used in the powder method include benzene (solubility: 0.09 wt%), mineral spirit (solubility: 0.00090 wt%), toluene (solubility: 0.05 wt%), chlorobenzene (solubility: 0.05 wt%), o-dichlorobenzene (solubility at 25° C: 0.01 wt%), xylene (solubility: 0.02 wt%), n-hexane (solubility: 0.014 wt%), n-heptane (solubility: 0.005 wt%), n-octane (solubility at 25° C: 0.002 wt%), carbon tetrachloride (solubility: 0.44 wt%) and CℓCH = C =

$CCl_2$ (solubility: 0.11 wt%).

These solvents may be used either alone or in a combination.

Further, other solvents such as acetone, tert-butyl alcohol, methyl ethyl kentone, chloroform and diethyl ether can be used in combination with the above-mentioned solvents. It is desirable that when mixed solvents are used, the content of solvents having solubility of not more than 0.5 wt% in water at 20 °C is usually not lower than 5% by weight, preferably not lower than 10% by weight.

The modifying reaction proceeds smoothly when the solvents having solubility of not more than 0.5 wt% in water at 20 °C as mentioned above are used.

In the powder method, the ethylenically unsaturated group-containing carboxylic acids, etc. are used in an amount of 0.001 to 50 parts by weight, preferably 0.1 to 40 parts by weight per 100 parts by weight of polyolefin particles.

The radical initiators are used in an amount of 0.01 to 10 parts by weight, preferably 0.05 to 8 parts by weight per 100 parts by weight of polyolefin particles.

The solvents having solubility of not more than 0.5 wt% in water at 20 °C are used in an amount of more than 10 parts by weight, but not more than 50 parts by weight, preferably 12 to 40 parts by weight per 100 parts by weight of polyolefin particles.

In the powder method, the polyolefin particles, the ethylenically unsaturated group-containing carboxylic acids, etc., the radical initiators and the solvents can be brought into contact with one another by various methods without particular limitation with regard to the contacting method and order of contacting them with one another.

Examples of methods for contacting them with one another and orders of contacting them with one another in the powder method include:

a method wherein the polyolefin particles are dispersed in a solution of the ethylenically unsaturated group-containing carboxylic acid, etc. and the radical initiator dissolved in the solvent and then a reaction is carried out;

a method wherein the polyolefin particles are dispersed in a solution of the radical initiator, the polyolefin particles are brought into a state where a reaction substantially proceeds, for example, by heating the polyolefin particles and then the ethylenically unsaturated group containing carboxylic acid, etc. is added thereto;

a method wherein the polyolefin particles are brought into a state where a reaction substantially proceeds, for example, by heating and the polyolefin particles and then dispersed in a solution of the ethylenically unsaturated group-containing carboxylic acid, etc. and the radical initiator dissolved in the solvent; and

a method wherein the polyolefin particles are dispersed in a solution of the radical initiator dissolved therein and the dispersion is brought into contact with a gaseous ethylenically unsaturated compound having hydroxyl group and/or ethylenically unsaturated compound having amino group while heating.

The contact of the polyolefin particles with the ethylenically unsaturated group-containing carboxylic acids, etc. is carried out at a temperature at which the shape of the polyolefin particles can be substantially kept. In the powder method, the modifying reaction is carried out at a temperature or lower at which the polyolefin particles are not fused to one another. The temperature at which the reaction can be conducted is generally a temperature of lower than the melting point of the resulting polymer. Though there is no particular limitation with regard to the lower limit of the reaction temperature in the reaction as mentioned above, the lower limit is usually about 0 °C when reaction efficiency is taken into consideration, because the radical initiator is decomposed even at a very low temperature.

With regard to the upper limit of the modifying temperature of the polyolefins which constitute the polyolefin particles, the upper limit of the modifying temperature of the polyolefin particles mainly composed of polypropylene is about 150 °C, the upper limit of the modifying temperature of the polyolefin particles mainly composed of high-density polyethylene is about 120 °C, and the upper limit of the modifying temperature of the polyolefin particles mainly composed of low-density polyethylene is about 90 °C.

The reaction time taken for the modification in the powder method can be suitably set by taking the reaction temperature, etc. into consideration, but is usually 1/60 to 20 hours, preferably 0.5 to 10 hours.

Any of apparatuses can be used for the above-described reaction, so long as the mixing and heating of the polyolefin particles can be made. For example, any of horizontal and vertical reactors can be used. Concretely, there can be used fluidized-bed reactors, moving bed reactors, loop reactors, horizontal reactors equipped with agitating element, rotating drums, vertical reactors equipped with agitating element, etc.

When the polyolefin particles are modified in the manner described above, the modifying reaction takes place in the interiors of the polyolefin particles and a group derived from carboxyl group, acid anhydride or

carboxylic acid derivative can be introduced in the interiors of the polyolefin particles.

The modified olefin polymer particles obtained by bringing the polyolefin particles and the modifying monomer into contact with each other in the manner as mentioned above have an average particle diameter of generally 100 to 5000 µm, preferably 200 to 4000 µm, particularly preferably 300 to 3000 µm, geometric standard deviation of generally 1.0 to 2.0, preferably 1.0 to 1.5, particularly preferably 1.0 to 1.3, an apparent specific gravity of generally 0.25 to 0.7, preferably 0.30 to 0.60, particularly preferably 0.35 to 0.50 and the content of particles having a particle diameter of not greater than 100 µm is not more than 20% by weight, preferably 0 to 10% by weight, particularly preferably 0 to 2% by weight of the particles. The mean value of the length of the major axis to the length of the minor axis is in the range of generally 1.0 to 3.0, preferably 1.0 to 2.0, particularly preferably 1.0 to 1.5.

Allyl glycidyl ether and/or vinyl glycidyl ether can be used as the modifiers in place of the above-described ethylenically unsaturated group-containing carboxylic acids, etc.

The olefin polymers are graft-modified by the above-described melting method, the solvent method or the powder method in the present invention. The thus-obtained modified olefin polymers have a modifier content (e.g., the content of the ethylenically unsaturated group containing carboxylic acids, etc.) of generally 0.01 to 10% by weight, preferably 0.1 to 5% by weight.

It is preferred that the above-described modified polymers (the wholly modified products) alone are used for the back-up layer of the third parabolic antenna reflector of the present invention. When the wholly modified products are used, parabolic antenna reflector excellent in rigidity and interlaminar bond strength can be obtained.

A mixture of the modified olefin polymer and the unmodified olefin polymer can be used for the modified olefin polymer layer in the present invention, so long as the purpose of the present invention can be achieved with regard to rigidity, etc.

## Composition containing polyamide and polyolefin

The back-up layer of the fourth parabolic antenna of the present invention is composed of a composition containing a polyamide and polyolefin.

Examples of the polyamide include polyamides obtained by the polycondensation of an aliphatic alicyclic or aromatic diamine such as hexamethylenediamine, decamethylenediamine, dodecamethylenediamine, 2,2,4- or 2,4,4-trimethylhexamethylenediamine, 1,3- or 1,4- bis(aminomethyl)-cyclohexane, bis(p-aminocyclohexylmethane) or m- or p-xylylenediamine with an aliphatic, alicyclic or aromatic dicarboxylic acid such as adipic acid, suberic acid, sebacic acid, cyclohexanedicarboxylic acid, terephthalic acid or isophthalic acid; polyamides obtained by the condensation of an aminocarboxylic acid such as ε-aminocaproic acid or 11-aminoundecanoic acid; polyamides obtained from a lactam such as ε-caprolactam or ω-laurolactam; interpolyamides obtained from the above-described components; and mixtures of these polyamides.

Concretely, nylon 6, nylon 66, nylon 610, nylon 6/66, nylon 66/610, nylon 6/11, etc. can be used.

Of these compounds, nylon 6 and nylon 66 are preferred, because they are excellent in rigidity or have an excellent effect of modifying polyolefins.

Polyamides having a relative viscosity ηr (as measured in 98% sulfuric acid according to JIS K 6810) of generally not lower than 1.0, preferably not lower than 2.0 are preferred, though there is no particular limitation with regard to molecular weight.

Examples of the polyolefin used for the composition include polyolefin homopolymers and copolymers of two or more olefins. The polymers are derived from straight-chain or branched-chain olefins having 2 to 18 carbon atoms. The olefins include concretely straight-chain olefins such as ethylene, propylene, 1-butene, 2-butene, 1-pentene, 2-pentene, 1-hexene, 1-heptene, 1-decene and 1-dodecene; and branched-chain olefins such as 2-methyl-1-butene, 3-methyl-1-butene, 2-methyl-2-butene, 3-methyl-1-heptene and 4-methyl-1-pentene. Of these compounds, propylene is preferable.

Examples of the copolymers of two or more olefins include ethylene/α-olefin copolymers such as ethylene/propylene copolymer and ethylene/1-butene copolymer, propylene/1-butene copolymer and copolymers of ethylene with two or more other α-olefins such as terpolymers (e.g., ethylene/propylene/1-butene copolymer). Further, crystalline copolymers obtained by copolymerizing compounds having vinyl group such as vinyl acetate, vinyl chloride, vinyl alcohol, (meth)acrylic acid, (meth)acrylic ester, maleic acid, maleic anhydride, glycidyl maleate, etc. in an amount of not more than 10 mol% can be used, so long as the α-olefins are used as the principal components of the copolymers. Among these copolymers, the

ethylene/propylene copolymer is preferable.

These copolymers may be block copolymers or random copolymers.

The polyolefins used in the present invention are generally crystalline and have a density of generally 0.89 to 0.98 g/cm$^3$, preferably 0.89 to 0.93 g/cm$^3$, an intrinsic viscosity [$\eta$] of generally 0.3 to 15 d$\ell$/g, preferably 0.4 to 10 d$\ell$/g as measured in decalin at 135 °C and a melt flow rate (MFR: ASTM D 1238.L) of generally 0.01 to 100 g/10 min, preferably 0.02 to 70 g/10 min.

Polyolefins having an MFR within a range described above are small in difference in melt viscosity from the polyamides and have an excellent dispersibility. Accordingly, when such polyolefins are used, parabolic antenna reflector having excellent impact resistance can be obtained.

The polyolefins may be wholly or partly graft-modified with a modifier. Examples of the modifier include graft monomers such as unsaturated carboxylic acids and derivatives thereof.

Concrete examples of the unsaturated carboxylic acids and derivatives thereof include unsaturated carboxylic acids such as acrylic acid, fumaric acid, tetrahydrophthalic acid, itaconic acid, citraconic acid, crotonic acid, isocrotonic acid and nadic acid (trade name, endocis-bicyclo[2.2.1]hept-5-ene-2,3-dicarboxylic acid) and derivatives thereof such as acid halides, amides, imides, acid anhydrides and esters. Concrete examples of the unsaturated carboxylic acid derivatives include maleyl chloride, maleimide, maleic anhydride, citraconic anhydride, methyl acrylate, methyl methacrylate, monomethyl maleate, dimethyl maleate and glycidyl maleate. Of these compounds, the unsaturated carboxylic acids and acid anhydrides thereof are preferred and maleic acid, nadic acid and acid anhydrides thereof are particularly preferred.

It is preferred that the modified polyolefins are modified with not more than 10% by weight, generally 0.001 to 10% by weight, preferably 0.1 to 5% by weight of the graft monomers.

The polyolefins can be graft-modified with the modifiers by known methods as mentioned above.

In the composition layer containing the polyamide and the polyolefin, the polyolefin is used in an amount of generally 25 to 500 parts by weight, preferably 25 to 400 parts by weight per 100 parts by weight of polyamide. When the amount of the polyolefin is less than 25 parts by weight, deformation is large and a sufficient surface accuracy can not be obtained, while when the amount is more than 400 parts by weight, a sufficient bond strength can not be obtained.

The composition containing the polyamide and the polyolefin can be obtained by conventional methods.

The layer composed of the above-described composition may be foamed by foaming the composition.

The composition layer composed of the above composition is excellent in rigidity and has a low water absorption ratio so that the layer scarcely causes a change in physical properties or dimension by the change of temperature.

In the parabolic antenna reflector of the present invention, since the back-up layer composed of a resin having a coefficient of linear expansion close to that of the metal layer is provided on the surface of the metallic layer, an excellent interlaminar bond strength between the metallic layer and the back-up layer can be kept even when the laminate is subjected to the expansion due to heat cycle, etc.

The back-up layer may contain various additives such as inorganic or organic filler, stabilizer against oxygen, heat and ultraviolet light, metal-deteriorating colorant, electrical characteristic improver,antistatic agent, lubricant, processability improve, nucleating agent, flame retarder, pigment, tackiness improver, etc. in such an amount that the purpose of the present invention is not adversely affected by the additives.

The inorganic filler includes powdered fillers and fibrous fillers. Examples of the powdered fillers include oxides such as alumina, magnesium oxide, calcium oxide and zinc white; hydrate metal oxides such as aluminum hydroxide, magnesium hydroxide, basic magnesium carbonate, calcium hydroxide, hydrated tin oxide and hydrated zirconium oxide; carbonates such as calcium carbonate and magnesium carbonate; silicates such as talc, clay, bentonite and attapulgite; borates such as barium borate and zinc borate; phosphates such as aluminum phosphate and sodium tripolyphosphate; sulfates such as gypsum; sulfites; and mixtures of two or more of them. Examples of the fibrous filler include glass fiber, potassium titanate fiber, metal-coated glass fiber, ceramic fiber, wollastnite carbon fiber and metal carbide fiber. Further, cured metal fiber, shpheres such as glass beads, glass balloon and shirasu balloon, glass powder, glass flake and mica can be used as inorganic fillers. The surfaces of these inorganic fillers may be treated with a silane compound such as vinyltriethoxysilane, 2-amino-propyltriethoxysilane or 2-glycidoxypropyltrimethoxysilane.

Among these inorganic fillers, preferred are mica, talc and glass fiber, because they have an excellent reinforcing effect such as excellent rigidity.

Examples of the organic filler include polyethylene fiber, polypropylene fiber, polyester fiber, polyamide fiber, vinylon fiber, rayon fiber, flax, rayon and cellulose.

These fillers may be used either alone or in a combination. Though there is no particular limitation with regard to the amount of these fillers to be blended, it is desirable that not more than 10% by weight, preferably not more than 5% by weight of the filler is blended with the resin for the back-up layer.

Preparation of parabolic antenna reflector

The parabolic antenna reflector of the present invention, which comprises the metallic layer-protecting resin layer, the metallic layer and the back-up layer, may be prepared in the following manner.

First, the metallic layer is laminated onto a thermoplastic resin which forms the metallic layer-protecting resin layer with hot laminating method, glue laminating method, polylaminating method, dry laminating method or extrusion laminating method. Alternatively, a precoat layer is provided on the surface of metal by a coating method such as roll coating, reverse roll coating or gravure coating. If desired, a parabolic antenna reflector having a metallic surface can be after-coated.

Such lamination, precoating or after-coating can be conducted by conventional methods.

The metallic surface to be bonded to the thermoplastic resin may be primed by means of gravure coating, reverse roll coating or roll coating.

The priming treatment can be carried out, for example, by coating a primer on one side of metal by the above-described methods and drying it at a temperature of 50 to 100 °C. A thermoplastic resin film or sheet is bonded to the optionally primed surface of the metallic layer under pressure by using pressure rollers heated to 50 to 100 °C.

Subsequently, the back-up layer composed of the above-described resins is formed on the metallic layer of the laminate obtained above to prepare the parabolic antenna reflector of the present invention.

Prior to the lamination of the back-up layer onto the laminate, the surface of the metallic layer of the laminate is previously subjected to a surface treatment such as priming treatment, formation treatment, chromate treatment, plasma treatment or sputtering treatment. Alternatively, an adhesive film such as polyolefin, modified polyolefin, ethylene/vinyl acetate copolymer, ethylene/vinyl alcohol copolymer, acrylic, polyamide or polyester type adhesive film is previously laminated onto the metallic layer.

In forming the back-up layer on the laminate, there is used an injection molding die 5 as shown in Fig. 3. The mold 5 is generally composed of a movable half 6 and a front mold 7 opposited to the movable half. The mold is provided with a nozzle 8. The position of the nozzle is not specified, but the nozzle is generally provided on the side of the front mold.

In the preparation of the parabolic antenna reflector of the present invention by using the injection molding die, the laminate 10 is set so that the surface of the metallic layer-protecting resin layer of the laminate is brought into contact with the inner surface (the convex surface of the mold) of the movable half and a cavity between the metallic layer and the mold is formed to injection-mold a resin which forms the back-up layer.

Namely, the laminate is positioned in the mold and pressed on the peripheral surface with a ring by an air cylinder, etc. Alternatively, the laminate is preformed preferably to form a flange and inserted into the parabolic side of the mold.

Subsequently, the resin for forming the back-up layer is injected into the mold through the injection molding nozzle with which the mold is provided, whereby the back-up layer 4 is formed on the metallic layer of the laminate.

The injection molding temperature of the resin varies depending on the characteristics of resins to be used. When the resin is the cycloolefin type random copolymer, the injection molding temperature is a temperature of higher than the softening temperature of the cycloolefin type random copolymer, but lower than the heat decomposition temperature thereof and is generally 220 to 350 °C, preferably 240 to 300 °C. When the resin is the modified olefin polymer, the injection molding temperature is a temperature of higher than the melting point of the modified olefin polymer, but lower than the heat decomposition temperature thereof and is generally 180 to 300 °C, preferably 200 to 280 °C.

When the composition containing the polyamide and the polyolefin is used, the injection molding temperature is a temperature of higher than the melting point of the composition, but lower than the heat decomposition temperature thereof and is generally 230 to 350 °C, preferably 250 to 300 °C.

Injection pressure varies depending on injection molding temperature, etc., but is generally 50 to 150 $kg/cm^2$, preferably 80 to 120 $kg/cm^2$ in terms of gauge pressure at the nozzle part of the cylinder of the injection molding machine.

The resin for forming the back-up layer of the parabolic antenna reflector foamed. When the foamed back-up layer is used, there is a possibility that sink marks or molding shrinkage can be further reduced. When the foamed back-up layer is used, the expansion ratio of the resin is generally 1.03 to 1.3, preferably 1.05 to 1.11. The maximum diameter of expanded cells in the foamed resin is not larger than 0.5 mm. While when the expansion ratio exceeds 1.3, there is a fear of causing the deterioration of strength. When the maximum diameter of the foamed cells exceeds 0.5 mm, there is a fear of forming blister or

unevenness on the surfaces of the metallic layer and the back-up layer.

Blowing agents used in the molding of the expansion molded article for forming the back-up layer include $N_2$ gas and chemical blowing agents.

When the chemical blowing agents are used, low expansion molding can be conducted by usual injection molding machines or there can be used gas counter pressure method wherein the inside of the mold is brought into high-pressure atmosphere, a resin containing a blowing agent is injected and gas is removed to effect expansion. When $N_2$ gas is used, low expansion molding can be conducted by extruders.

Examples of the chemical blowing agents include inorganic blowing agents such as sodium bicarbonate, ammonium carbonate, lithium boron hydride and silicone oxyhydride; and organic blowing agents such as azodicarbonamide (ADCA), azobisisobutyronitrile (AIBN), dinitrosopentamethylenetetramine (DPT), 4,4′-oxybisbenzenesulfonyl, hydrazide (OBSH) and p-toluenesulfonyl hydrazide (TSH). These blowing agents in an amount of 0.1 to 5.0% by weight, preferably 0.2 to 1.0% by weight are incorporated into the resins.

## EFFECT OF THE INVENTION

In the parabolic antenna reflector of the present invention, the back-up layer is formed by using the resins having a low coefficient of linear expansion over a wide temperature range so that there is a little difference in the coefficient of linear expansion between the metallic layer and the back-up layer and particularly delamination between the metallic layer and the back-up layer is scarcely caused. Accordingly, it is not necessary to add a large amount of a filler to the resin for forming the back-up layer as in conventional method when the back-up layer is formed.

Since the back-up layer composed of the resin as mentioned above is used for the parabolic antenna reflector of the present invention, there can be obtained a reflector which is very excellent in surface accuracy and less causes unevenness in reflection of radio wave in comparison with conventional reflectors.

In the parabolic antenna reflector of the present invention, complicated shapes such as boss can be easily provided. Even when boss part is provided, sink marks are not formed on the reflective surface and fine appearance can be retained. The reflector scarcely causes a change in mechanical strength, dimension, etc. even when environmental conditions are changed. Further, the reflector is excellent in impact resistance and has well-balanced properties with regard to weather resistance, water resistance, chemical resistance and hot water resistance.

Since the parabolic antenna reflector of the present invention is excellent in impact resistance, excellent high-temperature rigidity can be obtained without adding a large amount of a filler such as an inorganic filler to the back-up layer as in conventional reflection. Therefore the parabolic antenna can be made thinner and the weight thereof can be reduced by decreasing the amount of the filler to be blended.

Furthermore, the parabolic antenna reflector of the present invention can be prepared by a simple manufacturing process.

The present invention is further illustrated by reference to the following examples which, however, are not to be construed as limiting the present invention in any way.

Each measured value in the following Examples and Comparative Examples was determined in the following manner.

Weathering test (SWCM): Sunshine carbon weatherometer was used. Parabolic antenna reflector was exposed under conditions of black panel temperature of 63°C and duty cycle of 12 min/(60 min irradiation) for 2,000 hours. Thereafter, the appearance of surface (harmful changes such as change of gloss, crazing, blister, peeling of metallic foil, cracking, etc.) was evaluated. The mark o in Tables 3 to 6 means that no trouble is observed by visual evaluation, and the mark × means that troubles are observed by visual evaluation.

Heat cycle test: After samples were exposed to heat at 80°C for 2 hours, they were gradually cooled to -45°C over a period of 4 hours, exposed to this temperature for 2 hours and gradually heated to 80°C over a period of 4 hours. This cycle was carried out 100 times. Thereafter, the appearance of the surface of each sample was evaluated in the same way as in the weathering test.

Flexural modulus: Measurement was made according to ASTM D-790.

Coefficient of linear expansion: Measurement was made according to ASTM D-696.

Deformation of reflector: Evaluation was visually made by placing samples on platen.

Thermoplastic resins for the metallic layer-protecting resin layer, cycloolefin type random copolymers, modified polyolefin polymers, compositions containing the polyamide and the polyolefin, inorganic fillers

and metallic layers used in the examples and comparative examples are following materials. These materials together with the types and physical properties thereof are also shown in Tables 1 and 2.

Thermoplastic resin

PVdF: Polyvinylidene fluoride (hereinafter referred to as PVdF) having excellent weather resistance and a melt flow rate of 5.8 g/10 min (under a load of 10 kg at 250 °C according to ASTM D 1238).

PVF: Polyvinyl fluoride film of about 38 µm in thickness (both side treated type) (trade name: Tedlar manufactured by Du Pont).

Metallic layer

Aluminum of about 15 µm in thickness (hereinafter referred to as Aℓ)

Inorganic filler

Talc having an average particle diameter of 5 µm, mica (aspect ratio: about 10), glass fiber (fiber diameter: 13 µm, cut length: 3 mm, hereinafter referred to as GF) and calcium carbonate having an average particle diameter of 0.5 µm (hereinafter referred to as $CaCO_3$).

Cycloolefin type random copolymer

Composition AX:

(i) 80 parts by weight of pellets of cycloolefin addition polymer AXP1 (intrinsic viscosity [η]: 0.6 dℓ/g, Tg: 122 °C, MFR: 15 g/10 min at 260 °C, softening temperature TMA: 138 °C, a random copolymer of ethylene and 1,4,5,8-dimethano-1,2,3,4,4a,5,8,8a-octahydronaphthalene, ethylene content: 60 mol%)

(ii) 20 parts by weight of pellets of low-crystalline α-olefin polymer (called rubber) BXP1 (ethylene/propylene random copolymer, ethylene content: 80 mol%, intrinsic viscosity [η]: 2.2 dℓ/g, Tg: -54 °C, MFR: 0.7 g/min at 230 °C)

The copolymers (i) and (ii) were thoroughly mixed, melt-blended in a twin-screw extruder (PCM-45 manufactured by Ikegai Iron Works, Ltd.) at a cylinder temperature of 220 °C and pelletized by using a pelletiser to obtain pellets (hereinafter referred to as composition AX).

PP used in Comparative Examples 1 to 4 is homopolypropylene (Highpol J700 manufactured by Mitsui petrochemical Industries, Ltd.) having an MFR of 12 g/10 min.

Cycloolefin addition polymers (AXP) and rubbers (BXP) used in Examples are indicated in Tables 1 and 2, the composition AX being composed of said AXP and BXP.

In the following Tables, AXab means that AXPa is used as the cycloolefin addition polymer (AXP) for forming the composition AX and BXPb is used as rubber (BXP) for forming the composition AX.

Modified polyolefin

Maleinized PP

Homopolypropylene having a MFR of 12 g/10 min was graft-modified with maleic anhydride in such an amount as to give a graft ratio of 0.8 wt%.

GMA-PP

The same polypropylene as that used above was graft-modified with glycidyl methacrylate in such an

amount as to give a graft ratio of 1.0 wt%.

GMA-poly-4-methylpentene-1

Poly-4-methylpentene-1 having a MFR of 26 (260 °C, load of 5 kg) was graft-modified with glycidyl methacrylate (GMA) in such an amount as to give a graft ratio of 0.96 wt%.

Unmodified polypropylene used in Comparative Example was homopolypropylene having a MFR of 12 g/10 min.

Composition containing polyamide and polyolefin

Polyamide

Ny 66 (trade name: UBE Nylon 2015B manufactured by Ube Industries, Ltd.) having a relative viscosity of 2.50 and

Nylon 6 (trade name: Unitika Nylon 6 A1025 manufactured by Unitika Ltd.) having a relative viscosity of 2.3 were used as polyamides.

Aromatic nylon

Aromatic NY (aromatic polyamide) was synthesized in the following manner.

Into a 1 liter reactor were charged 254 g (2.19 M) of 1,6-diaminohexane, 247 g (1.49 M) of terephthalic acid, 106 g (0.64 M) of isophthalic acid, 0.45 g ($4.25 \times 10^{-3}$ M) of sodium hypophosphite as a catalyst and 148 mℓ of iron exchanged water. After the reactor was purged with nitrogen gas, a reaction was carried out at 250 °C under a pressure of 35 kg/cm$^2$ for one hour. After the completion of the reaction, the reaction mixture was drawn out of the reactor into a receiver under a pressure lower by about 10 kg/cm$^2$ than that of the reactor to obtain 545 g of a polyamide having an intrinsic viscosity [$\eta$] of 0.10 dℓ/g (in conc. sulfuric acid at 30 °C).

The polyamide was dried and melt-polymerized in a twin-screw extruder at a cylinder temperature of 330 °C to obtain an aromatic polyamide having an intrinsic viscosity [$\eta$] of 1.1 dℓ/g (in conc. sulfuric acid at 30 °C).

The aromatic polyamide had a terephthalic acid component unit content of 71 mol% and a melting point of 320 °C.

Modified polyolefin

Homopolypropylene (trade name: Highpol manufactured by Mitsui Petrochemical Industries, Ltd.) having a MFR of 1.4 g/10 min was graft-modified with maleic anhydride in such an amount as to give a graft ratio of 0.5 wt%. The resulting modified polyolefin was used.

Polyolefin

Homopolypropylene (trade name: Highpol manufactured by Mitsui Petrochemical Industries, Ltd.) having an MFR of 12 g/10 min was used as polyolefin.

Example 1

The above-described PVdF was formed into a film of 100 µm in thickness.

An acrylic primer (trade name: Vinylol 92T manufactured by Showa Highpolymer Co., Ltd.) was applied on one side of Aℓ in such an amount as to give a thickness of 20 µm. Other side of Aℓ was coated with a urethane primer (trade name: Adut 335 manufactured by Toyo Moton KK) in such an amount as to give a

thickness of 20 μm. The Aℓ foil and PVdF film were laminated onto each other in such a way that the acrylic primer-treated surface of the primed Aℓ foil (metallic layer) was positioned inwardly.

Further, 95 parts by weight of the composition $AX_{11}$ was dry-blended with 5 parts by weight of GF (glass fiber) in Henschel mixer for 5 minutes. The resulting mixture was pelletized at a resin temperature of 260° C in a twin screw extruder (PCM45 manufactured by Ikegai Iron Works, Ltd.) to obtain pellet (hereinafter referred to as composition AX/GF pellet). The Aℓ/PVdF laminate prepared above was placed in the mold of an injection molding machine (clamping force: 1000 ton) in such a way that the PVdF layer was positioned on the convex surface of the mold. After the mold was closed, the composition AX/GF pellet was insert-injection-molded on the metallic layer side at a resin temperature of 260° C under as injection pressure of 80 kg/cm² to prepare a parabolic antenna reflector.

The physical properties of this antenna reflector were measured. The results are shown in Table 3.

Examples 2 to 12 and Comparative Examples 1 to 4

Parabolic antenna reflectors were prepared in the same way as in Example 1 except that the constitution of each layer was changed as shown in Table 3.

The physical properties of these antenna reflectors were measured. The results are shown in Table 3.

Table 1

| Constitution: PVdF/Aℓ/composition AX (AXP + rubber) | | | | | | |
|---|---|---|---|---|---|---|
| Cycloolefin type random copolymer: 80 parts | | | | | | |
| AXP | Ethylene | Cycloolefin | [η] | Tg | MFR | TMA |
| $AXP_1$ | 66 mol% | *1 34 mol% | 0.6 dℓ/g | 122° C | 15 g/10 min (260° C) | 138° C |
| $AXP_2$ | 71 mol% | *2 29 mol% | 0.5 dℓ/g | 113° C | 19 g/10 min | 131° C |
| $AXP_3$ | 84 mol% | *3 16 mol% | 0.5 dℓ/g | 115° C | 14 g/10 min | 130° C |
| $AXP_4$ | 75 mol% | *4 25 mol% | 0.5 dℓ/g | 133° C | 16 g/10 min | 153° C |
| $AXP_5$ | 85 mol% | *5 15 mol% | 0.6 dℓ/g | 121° C | 10 g/10 min | 132° C |
| $AXP_6$ | 68 mol% | *6 32 mol% | 0.5 dℓ/g | 116° C | 21 g/10 min | 128° C |

*1: 1,4,5,8-dimethano-1,2,3,4,4a,5,8,8a-octahydronaphthalene
*2: 2-methyl-1,4,5,8-dimethano-1,2,3,4,4a,5,8,8a-octahydronaphthalene
*3: 2-propyl-1,4,5,8-dimethano-1,2,3,4,4a,5,8,8a-octahydronaphthalene
*4: 2-propyl-1,4,5,8-dimethano-1,2,3,4,4a,5,8,8a-octahydronaphthanene
*5: 2-methyl-3-ethyl-1,4,5,8-dimethano-1,2,3,4,4a,5,8,8a-octahydronaphthalene
*6: 2,10-dimethyltetracyclo-[4,4,0,$1^{2.5}$,$1^{7.10}$]-3-dodecene

## Table 2

Low crystalline α-olefin copolymer (rubber): 20 parts

| | BXP component | | | |
|---|---|---|---|---|
| | Type | Composition | [η] (dℓ/g) | Tg (°C) |
| $BXP_1$ | *1 | Ethylene content 80 mol% | 2.2 | -54 |
| $BXP_2$ | *1 | Ethylene content 80 mol% | 1.3 | -55 |
| $BXP_3$ | *2 | Ethylene content 67 mol%<br>Ethylidenenorbornene content 3 mol% | 2.2 | -45 |
| $EXP_4$ | *3 | Ethylene content 66 mol%<br>DMON content 3 mol% | 2.5 | -35 |
| $EXP_5$ | *4 | Styrene content 30 wt% | 0.65 | -58<br>90 |
| $EXP_6$ | *5 | Styrene content 24 wt% | 1.5 | -57 |

*1: Ethylene/propylene random copolymer

*2: Ethylene/propylene/ethylidenenorbornene random copolymer

*3: Ethylene/propylene/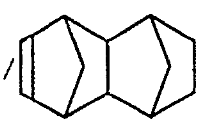(DMON) random copolymer

*4: Hydrogenated stylene/isoprene/styrene block copolymer

*5: Styrene/butadiene random copolymer

## Table 3

| | Constitution | Change of appearance (gloss, crazing, blister, peeling) SWCM 63°C ×2000 hr. | Change of appearance (gloss, crazing, blister, peeling) 100 times heat cycle -40°C×2 hr +80°C×2 hr | Flexural modulus ASTM D-790 ($kgf/cm^2$) | Coefficient of linear expansion ASTM D-696 | Deformation of reflector | Sink marks |
|---|---|---|---|---|---|---|---|
| Ex. 1 | *1 | o | o | 25000 | $6.0\times10^{-5}$ | o | o |
| Ex. 2 | *2 | o | o | 40000 | $5.0\times10^{-5}$ | o | o |
| Ex. 3 | *3 | o | o | 37000 | $4.5\times10^{-5}$ | o | o |
| Ex. 4 | *4 | o | o | 30000 | $6.0\times10^{-5}$ | o | o |
| Ex. 5 | *5 | o | o | 27000 | $5.8\times10^{-5}$ | o | o |
| Ex. 6 | *6 | o | o | 43000 | $5.0\times10^{-5}$ | o | o |
| Ex. 7 | *7 | o | o | 31000 | $5.3\times10^{-5}$ | o | o |
| Ex. 8 | *8 | o | o | 26000 | $5.5\times10^{-5}$ | o | o |
| Ex. 9 | *9 | o | o | 29000 | $5.4\times10^{-5}$ | o | o |
| Ex.10 | *10 | o | o | 27000 | $5.6\times10^{-5}$ | o | o |
| Ex.11 | *11 | o | o | 42000 | $5.0\times10^{-5}$ | o | o |
| Ex.12 | *12 | o | o | 22000 | $6.1\times10^{-5}$ | o | o |
| Comp. Ex. 1 | *13 | o | o | 58000 | $4.0\times10^{-5}$ | × | × |
| Comp. Ex. 2 | *14 | × | × | 33000 | $8.0\times10^{-5}$ | × | × |
| Comp. Ex. 3 | *15 | o | × | 45000 | $5.5\times10^{-5}$ | × | × |
| Comp. Ex. 4 | *16 | o | o | 70000 | $4.5\times10^{-5}$ | × | × |

*1 : PVdF/Aℓ/(composition $AX_{11}$ 95 wt% + GF 5 wt%)

*2 : PVdF/Aℓ/composition $AX_{11}$

*3 : PVdF/Aℓ/(composition $AX_{11}$ 95 wt% + mica 5 wt%)

*4 : PVdF/Aℓ/(composition $AX_{11}$ 95 wt% + carbon black 5 wt%)

*5 : PVdF/Aℓ/composition $AX_{21}$

*6 : PVdF/Aℓ/(composition $AX_{11}$ 93 wt% + GF 7 wt%)

*7 : PVdF/Aℓ/(composition $AX_{11}$ 95 wt% + mica 5 wt%)

*8 : PVdF/Aℓ/composition $AX_{31}$

*9 : PVdF/Aℓ/composition $AX_{41}$

*10: PVdF/Aℓ/composition $AX_{51}$

*11: PVdF/Aℓ/(composition $AX_{51}$ 95 wt% + GF 5 wt%)

*12: PVdF/Aℓ/composition $AX_{61}$

*13: PVdF/Aℓ/(composition PP 70 wt% + GF 30 wt%)

*14: PVdF/Aℓ/(composition PP 45 wt% + $CaCO_3$ 55 wt%)

*15: PVdF/Aℓ/(composition PP 60 wt% + talc 40 wt%)

*16: PVdF/Aℓ/(composition PP 60 wt% + mica 40 wt%)

Examples 13 to 22

Compositions $AX_{12}$ to $AX_{56}$ were prepared from $AXP_1$ to $AXP_5$ as indicated in Table 1 and the rubber component $BXP_2$ to $BXP_6$ as indicated in Table 2 in the same way as in the preparation of $AX_{11}$ to $AX_{61}$. Reflectors were then prepared in the same way as in Example 1. In the preparation of AX pellets, 1 g of Perhexin (trade name, a product of Nippon Oils & Fats Co., Ltd.) based on 1 kg of the resulting AX was added.

The physical properties of the antenna reflectors were measured. The results are shown in Table 4.

Example 23

A polyvinyl fluoride (PVF) film (trade name: Tedlar manufactured by Du Pont) as a metallic layer-protecting resin layer was dry-laminated onto one side of a soft aluminum foil of 100 µm in thickness, and an ethylene/vinyl acetate copolymer (EVA) film of 30 µm as an adhesive film was dry-laminated onto other side of the aluminum foil, said dry lamination being conducted by using a urethane adhesive. The resulting laminate was compression-molded so that the PVF layer becomes a concave side of the parabolic antenna reflector. The laminate is then inserted into the mold. After the mold was closed, the resin composition $AX_{12}$ was injection molded onto the EVA adhesive layer at a resin temperature of 260 °C under an injection pressure of 50 $kg/cm^2$. The mold temperature was set to 80 °C. The resulting 40 type reflector had little sink marks on the back side of boss and was found to be superior in surface accuracy which was 0.3 mm against best fit parabolic surface. The 180 ° peeling strength of the bond of the aluminum foil laminate was as good as 2 ~ 3 kgf/25 mm. The physical properties of the antenna reflector were measured. The results are shown in Table 4.

Example 24

One side of a soft aluminum foil of 100 μm in thickness was coated with an epoxy primer as a metallic layer-protecting resin layer in such an amount as to give a thickness of 5 μm Further, a polyester top coat in thickness of 15 μm was provided on the primed surface and baked. A composition $AX_{12}$ film (both sides thereof were previously subjected to corona discharge treatment) was dry-laminated onto the aluminum side of the resulting color-coated aluminum. The resulting laminated was inserted into a mold and composition $AX_{12}$ pellet was injection-molded in the same way as in Example 23. The resulting 40 type reflector had little sink marks and such excellent performance that best fit surface accuracy was 0.3 mm and the bond strength of the aluminum foil was 3 to 4 kgf/mm. The physical properties of the antenna were measured. The results are shown in Table 4.

# Table 4

| | Constitution | Change of appearance (gloss, crazing, blister, peeling) SWCM 63°C ×2000 hr. | 100 times heat cycle -40°C×2 hr +80°C×2 hr | Flexural modulus ASTM D-790 ($kgf/cm^2$) | Coefficient of linear expansion ASTM D-696 | Deformation of reflector | Sink marks |
|---|---|---|---|---|---|---|---|
| Ex.13 | *1 | o | o | 36000 | $5.8\times10^{-5}$ | o | o |
| Ex.14 | *2 | o | o | 28000 | $5.3\times10^{-5}$ | o | o |
| Ex.15 | *3 | o | o | 47000 | $4.7\times10^{-5}$ | o | o |
| Ex.16 | *4 | o | o | 42000 | $5.4\times10^{-5}$ | o | o |
| Ex.17 | *5 | o | o | 33000 | $5.1\times10^{-5}$ | o | o |
| Ex.18 | *6 | o | o | 29000 | $4.8\times10^{-5}$ | o | o |
| Ex.19 | *7 | o | o | 39000 | $5.2\times10^{-5}$ | o | o |
| Ex.20 | *8 | o | o | 32000 | $5.2\times10^{-5}$ | o | o |
| Ex.21 | *9 | o | o | 46000 | $4.9\times10^{-5}$ | o | o |
| Ex.22 | *10 | o | o | 40000 | $4.6\times10^{-5}$ | o | o |
| Ex.23 | *11 | o | o | 28000 | $5.3\times10^{-5}$ | o | o |
| Ex.24 | *12 | o | o | 28000 | $5.3\times10^{-5}$ | o | o |

*1 : PVdF/Aℓ/(composition $AX_{12}$ 95 wt% + GF 5 wt%)

*2 : PVdF/Aℓ/composition $AX_{12}$

*3 : PVdF/Aℓ/(composition $AX_{23}$ 95 wt% + GF 5 wt%)

*4 : PVdF/Aℓ/composition $AX_{23}$

*5 : PVdF/Aℓ/(composition $AX_{34}$ 95 wt% + GF 5 wt%)

*6 : PVdF/Aℓ/composition $AX_{34}$

*7 : PVdF/Aℓ/(composition $AX_{45}$ 95 wt% + GF 5 wt%)

*8 : PVdF/Aℓ/composition $AX_{45}$

*9 : PVdF/Aℓ/(composition $AX_{56}$ 95 wt% + GF 5 wt%)

*10: PVdF/Aℓ/composition $AX_{56}$

*11: PVF/Aℓ/EVA/composition $AX_{12}$

*12: Color coat/Aℓ/composition $AX_{12}$ film/composition $AX_{12}$

Example 25

The above-described PVdF was formed into a film of 100 μm in thickness.

One side of Aℓ was coated with an acrylic primer (trade name: Vinylol 92T manufactured by Showa Highpolymer Co., Ltd.) in such an amount as to give a thickness of 20 μm. Other side thereof was coated with a urethane primer (trade name: Adut 335 manufactured by Toyo Moton KK) in such an amount as to give a thickness of 20 μm. The primed Aℓ foil and the PVdF film were laminated onto each other in such way that the acrylic primer-treated side of the Aℓ foil was positioned inwardly.

Further, 95 parts by weight of maleinized PP and 5 parts of mica were dry-blended in a Henschel mixer. The resulting mixture was pelletized in a twin screw extruder (PCM45 manufactured by Ikegai Iron Works, Ltd.) at a resin temperature of 200° C to prepare pellets.

The Aℓ/PVdF laminate obtained above was placed in the mold of an injection molding machine (clamping force: 650 ton) in such a way that the metallic layer-protecting resin layer was positioned on the convex surface of the mold. After the mold was closed, the pellets of maleinized PP (95%)/mica (5%) was insert-injection-molded on the metallic layer at a resin temperature of 200° C under an injection pressure of 80 kg/cm$^2$ to prepare a 45 type parabolic antenna reflector.

The physical properties of the antenna reflector were measured. The results are shown in Table 5.

Examples 26 to 28 and Comparative Examples 5 to 7

The procedure of Example 25 was repeated except that the constitution of each layer was changed as shown in Table 5. The results are shown in Table 5.

## Table 5

| Example or Comp. Ex. | Constitution | Change of appearance (gloss, crazing, blister, peeling) | | Flexural modulus ASTM D-790 ($kgf/cm^2$) |
|---|---|---|---|---|
| | | SWCM 63°C × 2000 hr | 100 times heat cycle -40°C×2 hr+80°C×2 hr | |
| Ex. 25 | *1 | o | o | 30000 |
| Ex. 26 | *2 | o | o | 30000 |
| Ex. 27 | *3 | o | o | 20000 |
| Ex. 28 | *4 | o | o | 15000 |
| Ex. 29 | *5 | o | o | 15000 |
| Ex. 30 | *6 | o | o | 15000 |
| Comp. Ex. 5 | *7 | × | × | 15000 |
| Comp. Ex. 6 | *8 | × | o | 70000 |
| Comp. Ex. 7 | *9 | o | × | 15000 |

*1: PVdF/Aℓ/(maleinized PP 95 wt% + mica 5 wt%)

*2: PVdF/Aℓ/(GMA-PP 95 wt% + talc 5 wt%)

*3: PVdF/Aℓ/maleinized PP

*4: PVdF/Aℓ/GMA-poly-4-methylpentene-1

*5: PVdF/Aℓ/EVA/GMA-poly-4-methylpentene-1

*6: Color coat/Aℓ/GMA-poly-4-methylpentene-1/GMA-poly-4-methylpentene-1

*7: PVdF/Aℓ/PP

*8: PVdF/Aℓ/(PP 60 wt% + mica 40 wt%)

*9: PVdF/Aℓ/primer/PP

Example 29

A polyvinyl fluoride (PVF) film (Tedlar manufactured by Du Pont) of 38 µm as a metallic layer-protecting resin layer was provided on one side of a soft aluminum foil of 100 µm. An ethylene/vinyl acetate copolymer (EVA) film of 30 µm as an adhesive layer was dry-laminated onto other side of the aluminum foil with a urethane adhesive. The resulting laminate was compression molded so that the PVF layer becomes a concave side of the parabolic antenna reflector. The resulting laminate was inserted into the mold. After the mold was closed, the insert injection molding of GMA-poly-4-methylpentene-1 was conducted onto the EAV adhesive layer at a resin temperature of 250 °C under an injection pressure of 50 kg/cm$^2$ to prepare a 45 type parabolic antenna reflector. The 180° peeling strength of the aluminum foil was 2 ~ 3 kgf/25 mm. Hence, adhesion was found to be good.

Example 30

One side of a soft aluminum foil of 100 µm was coated with an epoxy primer in such an amount as to give a thickness of 5 µm. Further, a polyester topcoat was provided on the primed surface in a thickness of 15 µm and baked. A GMA-poly-4-methylpentene-1 film of 40 µm as an adhesive layer was dry-laminated onto the aluminum side of the resulting color coated aluminum. The resulting laminate was inserted into the mold and GMA/poly-4-methylpentene-1 was injection molded in the same way as in Example 29 to prepare a 45 type parabolic antenna reflector. The 180° peeling strength of the aluminum was 3 ~ 4 kgf/25 mm. Hence, adhesion was found to be good.

Example 31

The above-described PVdF was formed into a film of 100 µm in thickness.

An acrylic primer (Vinylol 92T manufactured by Showa Highpolymer Co., Ltd.) was applied on one side of Aℓ in such an amount as to give a thickness of 20 µm. Other side of Aℓ was coated with a urethane primer (Adut manufacture by Toyo Moton KK) in such an amount as to give a thickness of 20 µm. The primed Aℓ was dried. The resulting Aℓ foil and the PVdF film were laminated onto each other in such a way that the acrylic primer-coated side was positioned inwardly.

Further, 60 parts by weight of Ny 66 was dry-blended with 40 parts by weight of modified PP in a Henschel mixer for 5 minutes. The resulting mixture was pelletized in a twin screw extruder (PCM 45 manufactured by Ikegai Iron Works, Ltd.) at a resin temperature of 280 °C to obtain pellets.

The Aℓ/PVdF laminate prepared above was put into the mold of an injection molding machine (clamping force: 550 ton) in such a way that the metallic layer-protecting resin layer was positioned on the convex side of the mold. After the mold was closed, the Ny 66/modified pellet was kneaded at a resin temperature of 240 °C and insert-injection-molded on the metallic layer side at the same temperature under an injection pressure of 80 kg/cm$^2$ to prepare a 45 type parabolic antenna reflector.

The physical values of the reflector are shown in Table 6.

Examples 32 to 34 and Comparative Examples 8 to 10

The procedure of Example 31 was repeated except that the resin compositions of the layer containing the polyamide and the polyolefin as indicated in Table 7 were used and insert injection molding was conducted at resin temperatures as indicated in Table 7.

The physical values of the resulting parabolic antenna reflectors are shown in Table 6.

Table 6

| Example or Comp.Ex. | Constitution | Change of appearance (gloss, crazing, blister, peeling) | | Flexural modulus ASTM D-790 ($kgf/cm^2$) | Coefficient of linear expansion ASTM D-696 | Deformation of reflector |
|---|---|---|---|---|---|---|
| | | Water absorption 60°C in water ×2000 hr | 100 times heat cycle -40°C×2 hr +80°C×2 hr | | | |
| Ex.31 | *1 | ○ | ○ | 32000 | $10\times10^{-5}$ | ○ |
| Ex.32 | *2 | ○ | ○ | 50000 | $8\times10^{-5}$ | ○ |
| Ex.33 | *3 | ○ | ○ | 70000 | $5.0\times10^{-5}$ | ○ |
| Ex.34 | *4 | ○ | ○ | 40000 | $7\times10^{-5}$ | ○ |
| Ex.35 | *5 | ○ | ○ | 50000 | $8\times10^{-5}$ | ○ |
| Ex.36 | *5 | ○ | ○ | 50000 | $8\times10^{-5}$ | ○ |
| Comp. Ex. 8 | *6 | ○ | ○ | 58000 | $4.0\times10^{-5}$ | × |
| Comp. Ex. 9 | *7 | ○ | ○ | 70000 | $4.5\times10^{-5}$ | × |
| Comp. Ex.10 | *8 | × | × | 33000 | $8.0\times10^{-5}$ | × |

*1: PVDF/Aℓ/Ny66 + modified PP
*2: PVDF/Aℓ/Ny6 modified + PP mica 5%
*3: PVDF/Aℓ/aromatic Ny + modified PP + talc 5%
*4: PVDF/Aℓ/aromatic Ny + modified PP
*5: PVDF/Aℓ/Ny6 modified + PP + mica 5%
*6: PVDF/Aℓ/PP + GF 30%
*7: PVDF/Aℓ/PP + mica 40%
*8: PVDF/Aℓ/PP + $CaCO_3$ 55%

Table 7

| | Resin Composition | Inorganic filler | | Resin temperature °C | |
|---|---|---|---|---|---|
| | | Type | Content | Kneading | Injection molding |
| Ex. 32 | *1 | Mica | 5 wt% | 240 | 240 |
| Ex. 35 | *1 | Mica | 5 wt% | 240 | 240 |
| Ex. 36 | *1 | Mica | 5 wt% | 240 | 240 |
| Ex. 33 | *2 | Talc | 5 wt% | 330 | 330 |
| Ex. 34 | *2 | -- | --- | 330 | 330 |
| Comp. Ex. 8 | J700 | GF | 30% | 200 | 210 |
| Comp. Ex. 9 | J700 | Mica | 40% | 200 | 210 |
| Comp. Ex. 10 | J700 | $CaCO_3$ | 55% | 200 | 210 |

*1: Ny6/modified PP = 60/40 parts by weight
*2: Aromatic Ny/modified PP = 60/40 parts by weight

Example 35

A polyvinyl fluoride (PVF) film (Tedlar manufactured by Du Pont) layer of 38 µm as a metallic layer-protecting resin layer was provided on one side of a soft aluminum foil of 100 µm. An ethylene/vinyl acetate copolymer (EVA) film of 100 µm as an adhesive layer was dry-laminated on other side of the aluminum foil by means of an urethane adhesive. The resulting laminate was compression molded so that the PVF layer becomes a concave side of the parabolic antenna. The resulting laminate was inserted into the mold. After the mold was closed, the Ny6-modified PP/mica (5%) was insert injection-molded on the EVA adhesive layer at a resin temperature of 240 °C under an injection pressure of 80 $kg/cm^2$ to prepare a 45 type parabolic antenna reflector.

Example 36

One side of a soft aluminum foil of 100 µm was coated with an epoxy primer as a metallic layer-protecting resin layer in such an amount as to give a thickness of 5 µm Further, a polyester top coat in a thickness of 15 µm was provided on the primed surface and baked. A nylon copolymer film of 40 µm as an adhesive layer was dry-laminated on the aluminum side of the resulting color-coated aluminum with an urethane adhesive. The resulting laminate was inserted and nylon 66-modified PP was injection-molded at a resin temperature of 240 °C in the same way as in Example 35 to prepare a parabolic antenna reflector.

Example 37

[Preparation of back-up layer composed of foamed resin]

One side of a soft aluminum foil of 100 µm was coated with an epoxy primer as a metallic layer-protecting resin layer in such an amount as to give a thickness of 5 µm. Further, a polyester topcoat in a thickness of 15 µm was provided on the primed surface. Both sides of a film of 30 µm in thickness were subjected to a corona discharge treatment, said film being composed of the same material as that of the back-up layer described hereinbelow. The film as an adhesive layer was dry-laminated onto the aluminum side of the resulting color coated aluminum foil with a urethane adhesive. The resulting laminate was compression-molded so that the metallic layer-protecting resin layer becomes a concave side of the parabolic surface. The laminate was then inserted into a mold. The mold was clamped, high-pressure air was introduced into the mold and the internal pressure of the mold was kept at 20 $kg/cm^2$. Thereafter, a cycloolefin type random copolymer (MFR: 6 g/10 min at 260 °C) containing 4% by weight of a blowing agent-containing pellet (EE207 manufactured by Eiwa Kasei Kagaku Kogyo KK) was injected at a resin temperature of 260 °C under an injection pressure of 60 $kg/cm^2$. The injection amount was 90% of the amount of solid molding (the amount for preparing an non-foamed molded article) and pressure within the mold was lowered just before the completion of injection to foam the resin. Thereafter, pressure was kept at 15 $kg/cm^2$ and the foamed resin was cooled at a mold temperature of 60 °C for 60 seconds. The expansion ratio of the resin which formed the back-up layer was 1.10. The maximum diameter of foamed cells was about 0.3 mm. The surface accuracy based on designed parabolic surface was 0.3 mm.

## Claims

1. A parabolic antenna reflector comprising a laminate of, in order, a protective resin layer, a metallic layer and a back-up layer wherein the back-up layer is composed of a copolymer [A] which is a cycloolefin type random copolymer comprising an ethylene component and a cycloolefin component derived from a monomer of general formula [I]:

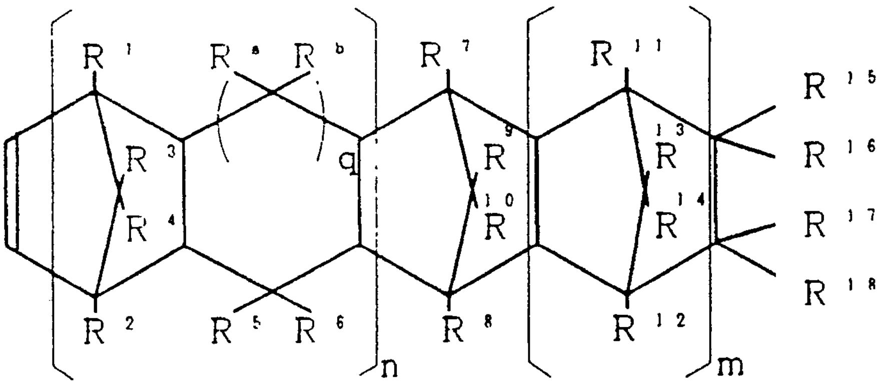

... [ I ]

wherein n is 0 or 1, m is 0 or a positive integer, q is 0 or 1, $R^1$ - $R^{18}$ individually represent hydrogen, halogen or a hydrocarbon group, $R^{15}$ - $R^{18}$ may link together to form a mono- or polycyclic ring which may have a double bond, and $R^{15}$ together with $R^{16}$ or $R^{17}$ together with $R^{18}$ may form an alkylidene group, or general formula [II]:

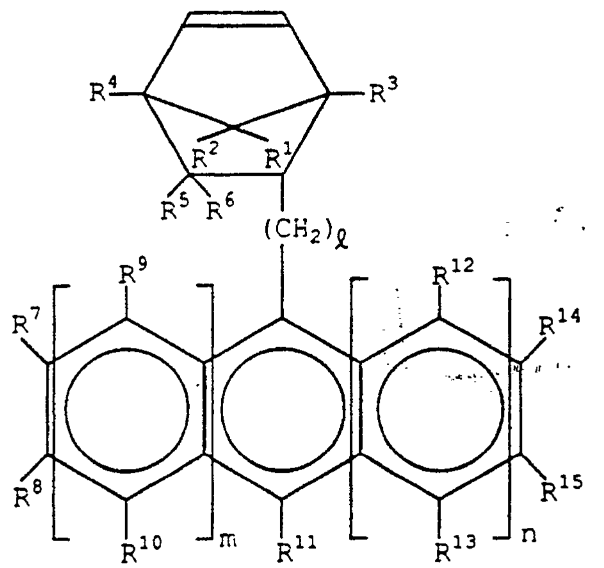

[II]

wherein is 0 or an integer of at least 1, m and n are each 0, 1 or 2, $R^1$ - $R^{15}$ individually represent hydrogen, halogen, an aliphatic hydrocarbon group an aromatic hydrocarbon group or an alkoxy group, and $R^5$ (or $R^6$) and $R^9$ (or $R^7$) may link together to form an alkylene group of 1-3 carbon atoms or a direct bond.

2. A parabolic antenna reflector comprising a laminate of, in order, a protective resin, a metallic layer and a back-up layer, wherein the back-up layer comprises a copolymer [A] as defined in claim 1 and a non-crystalline or low-crystalline α-olefin elastomeric copolymer composed of at least two olefins.

3. A parabolic antenna reflector comprising a laminate of, in order, a protective resin layer a metallic layer and back-up layer, wherein the back-up layer comprises a modified olefin polymer obtainable by modifying an olefin polymer with a modifier which has a polar group.

4. A parabolic antenna reflector according to claim 3, wherein said modifier is a carboxylic acid, acid anhydride or carboxylic acid derivative containing an ethylenically unsaturated group.

5. A parabolic antenna reflector according to claim 3 or 4, wherein said modified olefin polymer contains a constituent unit derived from said modifier in an amount of 0.01 to 10% by weight.

6. A parabolic antenna reflector comprising a laminate of, in order, a protective resin layer, a metallic layer and back-up layer, wherein the back-up layer comprises a polyamide and a polyolefin.

7. A parabolic antenna reflector according to claim 6, wherein said polyolefin is partially or wholly modified with a modifier.

8. A parabolic antenna reflector according to any one of claims 1 to 7, wherein said resin which comprises the back-up layer contains a filler.

9. A parabolic antenna reflector according to any one of the preceding claims wherein said resin which comprises the back-up layer is foamed.

10. A parabolic antenna reflector according to claim 9 wherein said resin is foamed at an expansion ratio of 1.03 to 1.3 and the maximum diameter of foamed cells is not larger than 0.5 mm.

11. A process for preparing a parabolic antenna reflector as claimed in any one of the preceding claims, which comprises:

either laminating a resin film or sheet onto one side of a metallic layer or coating one side of the metallic layer with a resin to form a protective resin layer on one side of the metallic layer;

placing the resulting laminate in a mold in such a way that the protective resin layer is brought into contact with a convex surface of the mold; and then

injecting the resin which is to form the back-up layer through the nozzle of the mold into the mold to form the back-up layer on the other side of the metallic layer.

12. A process according to claim 11, wherein the metallic layer is pretreated by plasma treatment or primer treatment or an adhesive layer is preformed on the other side of the metallic layer by laminating an adhesive resin film thereon.

13. A process according to claim 11 or 12 for preparing a parabolic antenna reflector as claimed in claim 3, wherein said modified polyolefin polymer is composed of modified polyolefin particles obtained by contacting 100 parts by weight of polyolefin particles with 0.01 to 50 parts by weight of a carboxylic acid, acid anhydride or carboxylic acid derivative containing an ethylenically unsaturated group in the presence of 10 to 50 parts by weight of a solvent having solubility of not more than 0.5 wt% in water or a solvent mixture thereof and 0.01 to 10 parts by weight of a radical initiator.

14. A process according to claim 11 or 12 for preparing a parabolic antenna reflector as claimed in claim 9 or 10, wherein the resin which forms the back-up layer contains a blowing agent, the resin is injected into a mold and pressure within the mold is reduced just before the completion of injection to foam the resin.

FIG. 1 (A)

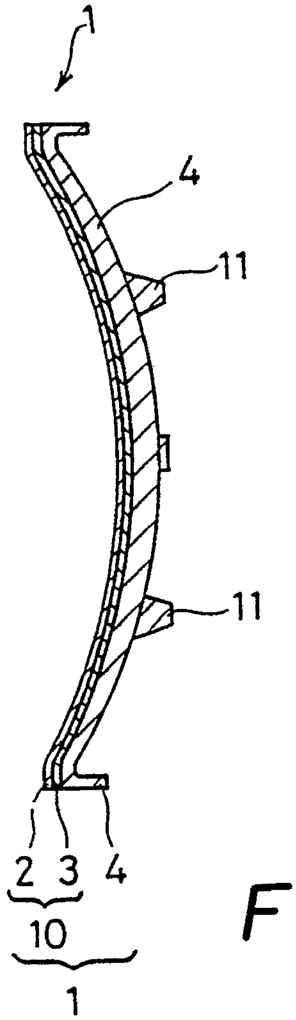


FIG. 1 (B)

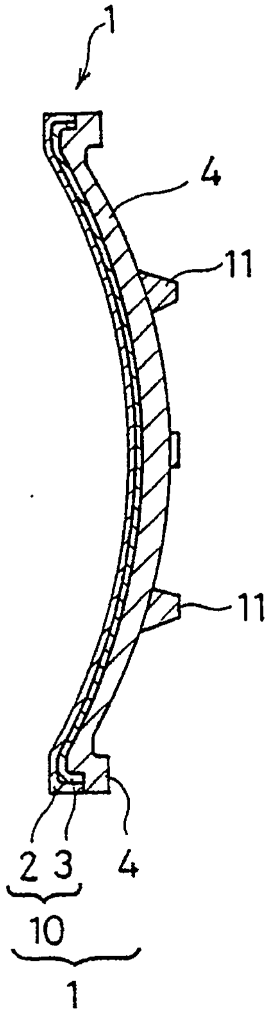


FIG. 2

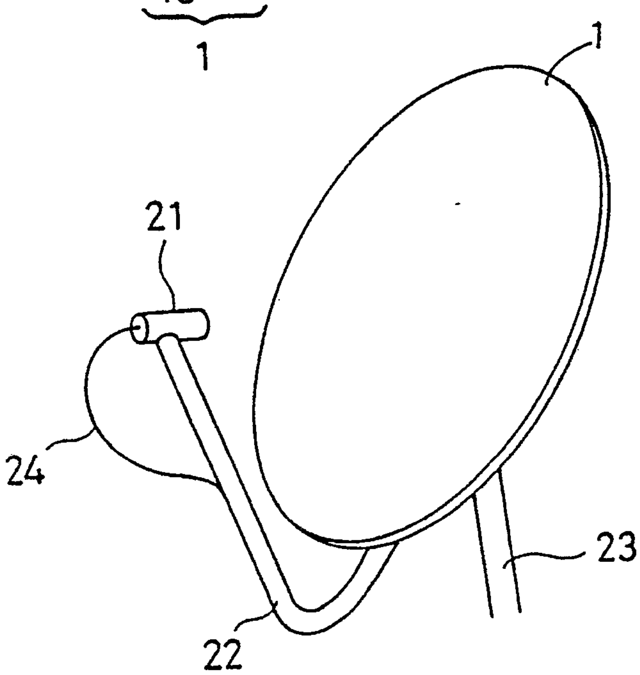

FIG. 3 (A)

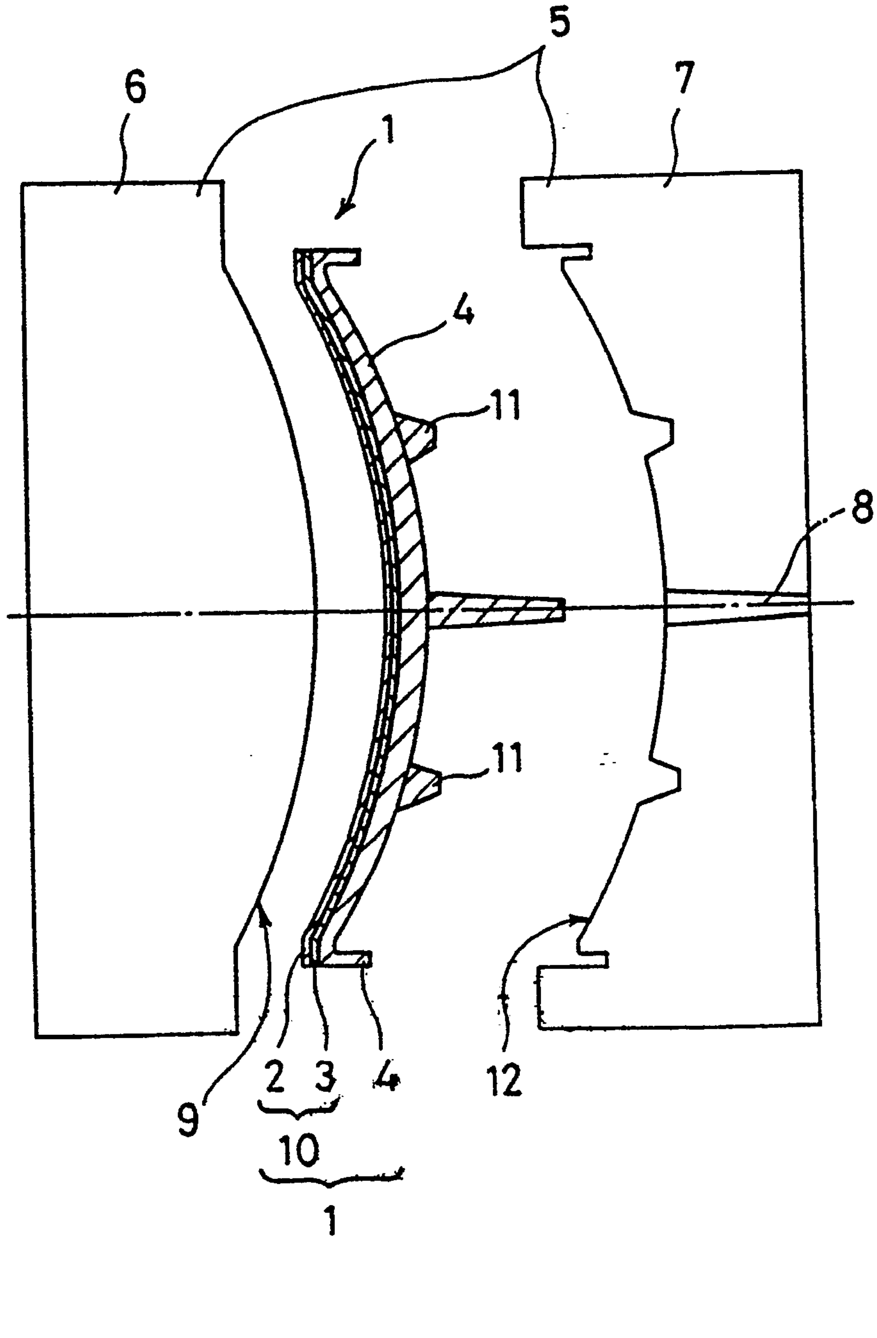

FIG. 3 (B)